# EUROPEAN PATENT SPECIFICATION

(11) **EP 4 438 393 B1**
(45) Date of publication and mention of the grant of the patent: **17.09.2025**
(21) Application number: 23164984.9
(22) Date of filing: 29.03.2023
(51) Int. Cl.: B60L 53/80, B60L 53/67, B60L 53/68, B60L 53/63, B60L 58/12, G08G 1/00, G08G 1/0968, B60S 5/06, G01C 21/34, B60L 53/64

(54) **COMPUTER-IMPLEMENTED METHOD FOR CONTROLLING A DISTRIBUTION OF CHARGED BATTERIES IN A SYSTEM COMPRISING LOCALLY DISTRIBUTED STATIONS FOR PROVIDING EXCHANGE BATTERIES**
COMPUTERIMPLEMENTIERTES VERFAHREN ZUR STEUERUNG EINER VERTEILUNG VON GELADENEN BATTERIEN IN EINEM SYSTEM MIT LOKAL VERTEILTEN STATIONEN ZUR BEREITSTELLUNG VON AUSTAUSCHBATTERIEN
PROCÉDÉ MIS EN UVRE PAR ORDINATEUR POUR COMMANDER UNE DISTRIBUTION DE BATTERIES CHARGÉES DANS UN SYSTÈME COMPRENANT DES STATIONS DISTRIBUÉES LOCALEMENT POUR FOURNIR DES BATTERIES D'ÉCHANGE

(43) Date of publication of application: 02.10.2024
(73) Proprietor: HONDA MOTOR CO., LTD., Tokyo 105-8404 (JP)
(72) Inventor: Einecke, Nils, 63073 Offenbach am Main (DE); Lydia, Fischer, 63073 Offenbach am Main (DE)
(74) Representative: Beder, Jens

(56) References cited:
- JP-A- 2020 004 417
- US-A1- 2013 046 457
- US-A1- 2017 043 671
- US-A1- 2021 316 633
- US-A1- 2021 347 275
- US-B2- 10 906 511

## Description

The present invention relates to a computer-implemented method for controlling a distribution of charged batteries in a system comprising locally distributed stations for providing exchange batteries and entities each comprising one or more battery slots; and to such a system.

The European patent application EP 21 215 372.0 describes an electric vehicle dial-a-ride system. The European patent application EP 22 217 291.8 describes a prediction-based battery swapping charging control with pre-charge battery levels.

Nowadays there is a clear trend towards electrified mobility. For this there is a strong need for convenient and fast refilling of electrical vehicles as people are used to with vehicles using fossil fuel for driving. An electrical vehicle may be understood as a vehicle comprising one or more batteries for providing electrical power for propulsion of the vehicle. The change towards electrified mobility requires a change in infrastructure. While fossil fuel power vehicles and machines may be filled up quickly at gas stations, electric vehicles and machines need to be either recharged comparatively slowly at a charging station or swap/replace their discharged (empty) one or more batteries with one or more charged batteries (e.g. recharged batteries) at a station that may be referred to as "battery swapping station" or "battery exchange station".

Battery exchange stations allow a faster refilling with electrical energy of an electrical vehicle (i.e. providing the vehicle with one or more charged batteries) compared to stations for recharging the electrical vehicle's one or more batteries. That is, battery swapping has the great advantage of speed compared to charging. Battery exchange stations may be used for lightweight electrified mobility, i.e. lightweight electrical vehicles, like electrical scooters, electrical bicycles, electrical motorbikes etc.

The location of battery exchange stations is to be planned with great care in order to provide convenient and fast refilling of electrical vehicles at locations where there is a high demand. The stations are to be large enough (i.e. number of charged batteries provided at a station at a time should be large enough) to meet respective demands, but also should not be larger than necessary to avoid unnecessary cost and to be price competitive to other solutions. Thus, planning the location of these stations may be optimized under the light of mobility data. For example, in case mobility data indicate in an area a high mobility rate, the probability of a larger amount of vehicles needing to swap one or more of its batteries is higher in this area. As a result there will be a higher demand for charged batteries in the aforementioned area, which may be taken into consideration when planning locations of battery exchange stations. However, even a careful planning of the locations of battery exchange stations may not prevent a certain risk that the positions of the stations is not optimal, or the stations are not able to meet the demand for charged batteries at all times, e.g. because the behavior of people and/or the extend of electrified mobility changes. On the other hand, there may be stations that are underutilized. US 2017/043671 A1 discloses a computer-implemented method for controlling a distribution of charged batteries in a system comprising locally distributed stations for providing exchange batteries and entities each comprising one or more battery slots, wherein the method comprises- monitoring an amount of charged batteries of each of the stations;- monitoring a demanded amount of charged batteries of each of the stations;- computing a re-distribution of the charged batteries in the system using the monitored amount of charged batteries of each of the stations and the monitored demanded amount of charged batteries of each of the stations; and- providing a command to a communication entity associated with an entity of the entities to perform at least a part of the computed re-distribution of the charged batteries in the system.

US 2013/046457 A1, US 10 906 511 B2, US 2021/347275 A1 each disclose computer-implemented method for controlling charged batteries in a system comprising locally distributed stations for providing exchange batteries and entities each comprising one or more battery slots. These documents do not disclose controlling distribution of charged batteries in the system.

Therefore, it is an object of the present invention to provide a computer-implemented method that may mitigate the above described disadvantages. It is in particular an object of the present invention to provide a computer-implemented method that may optimize usage of charged batteries in a system comprising locally distributed stations for providing exchange batteries.

These and other objects, which become apparent upon reading the following description, are solved by the subject-matter of the independent claims. The dependent claims refer to preferred embodiments of the invention.

According to a first aspect of the invention, a computer-implemented method for controlling a distribution of charged batteries in a system is provided. The system comprises locally distributed stations for providing exchange batteries, and entities each comprising one or more battery slots. The method comprises monitoring an amount of charged batteries of each of the stations; and monitoring a demanded amount of charged batteries of each of the stations. The method comprises computing a re-distribution of the charged batteries in the system using the monitored amount of charged batteries of each of the stations and the monitored demanded amount of charged batteries of each of the stations. The method comprises providing a command to a communication entity associated with an entity of the entities to perform at least a part of the computed re-distribution of the charged batteries in the system.

In other words, the first aspect of this invention proposes a computer-implemented method allowing to mitigate the above described disadvantages by monitoring a demand (i.e. monitoring the demanded amount of charged batteries) and capabilities (i.e. monitoring the amount of charged batteries) of each of the stations with regard to charged batteries and computing based on the aforementioned monitoring a re-distribution of the charged batteries. This allows re-distribution of the charged batteries in the system. For example, this allows a physical re-location of charged batteries, according to the computed re-distribution of the charged batteries, from underutilized stations to stations with high demand for charged batteries. Such re-location allows the stations of the system to be better utilized and peak loads in demand for charged batteries may be compensated or distributed. Therefore, the method of the first aspect allows optimizing usage of charged batteries in the system.

The terms "arrangement" and "re-arrangement" may be used as synonyms for the terms "distribution" and "re-distribution", respectively. The re-distribution of the charged batteries may be a re-location of the charged batteries. Computing the re-distribution of the charged batteries may comprise or may be planning a re-distribution of the charged batteries, i.e. generating a plan according to which the charged batteries are to be re-distributed.

Each of the one or more battery slots of an entity may be configured to accommodate a battery. The terms "hold", "carry" and "transport" may be used instead of the term "accommodate". The entities of the system may comprise at least one of one or more autonomous vehicles, one or more autonomous robots, one or more vehicles each operated by a human, and one or more robots each operated by a human. The vehicles may comprise at least one of one or more scooters, one or more motorcycles, one or more bicycles, one or more boats, one or more cars, one or more buses, one or more trucks, one or more planes, and one or more flying drones. In other words, the vehicle may be configured to move on land, on water and/or in the air. The one or more vehicles may be one or more electrical vehicles, i.e. electrical powered vehicles. The one or more robots may be one or more electrical robots, i.e. electrical powered robots. The entities may be configured to move (e.g. between at least two stations of the stations, near one or more stations and/or passing by one or more stations). The entities may be referred to as "mobile entities" or "movable entities".

The stations may be referred to as "battery exchange stations" or "battery swapping stations". The passage "locally distributed stations" means that the stations of the system are arranged at different locations (within an area for which the system is configured to provide a battery swapping function). The passage "amount of charged batteries of a station" may be understood as the amount of charged batteries that are available at the station. The passage "demanded amount of charged batteries of a station" may be understood as the amount of charged batteries that are demanded/requested at the station. Each station may comprise battery slots for storing batteries. The greater the number of battery slots of a station the greater the number of batteries that may be stored by the station. One or more stations, optionally each station, of the stations may be configured to charge the batteries stored at the station or a part of the batteries stored at the station.

Monitoring an amount of charged batteries of each of the stations may comprise determining at fixed time intervals (e.g. every minute, every five minute, every ten minute etc.) the amount of charged batteries of each station of the stations and optionally storing the determination results. Monitoring a demanded amount of charged batteries of each of the stations may comprise determining at fixed time intervals (e.g. every minute, every five minutes, every ten minutes etc.) the demanded amount of charged batteries of each station of the stations and optionally storing the determination results.

Computing a re-distribution of the charged batteries in the system using the monitored amount of charged batteries of each of the stations and the monitored demanded amount of charged batteries of each of the stations may comprise computing at fixed time intervals (e.g. every minute, every five minute, every ten minute etc.) the re-distribution of the charged batteries in the system and optionally storing the computation results. Providing a command to a communication entity associated with an entity of the entities to perform at least a part of the computed re-distribution of the charged batteries in the system may comprise providing the command in response to a computation (e.g. re-computation) of the re-distribution of the charged batteries in the system.

Data of each station of the stations, such as one or more of location data (e.g. GPS data) of the station, opening hours of the station, maximum number of batteries that may be stored at the station and a maximum combined charging power of the batteries stored at the station, may be used for computing the re-distribution of the charged batteries in the system. Further, the method may comprise monitoring at least one of the following information of each of the stations: amount of batteries of the station without failure (i.e. amount of functional batteries), a charging level of each battery of the station and planned or predicted charging level of the batteries of the station for one or more time periods in the future, such as for the next hour, next two hours, next four hours and/or next day. The aforementioned monitoring may be understood as determining at fixed time intervals (e.g. every minute, every five minute, every ten minute etc.) the aforementioned information of each station of the stations and optionally storing the determination results. The method may use the aforementioned information for computing the re-distribution of the charged batteries in the system. The term "state of charge (SOC)" may be used as a synonym for the term "charging level". Thus, a battery with a high charging level has a high SOC and a battery with a low charging level has a low SOC. The SOC of a battery may be a percentage of a full charge capacity of the battery.

Providing the command to the communication entity associated with the entity may comprise a wired and/or wireless communication. In other words, this may be understood as controlling a wired and/or wireless communication of the command to the communication entity associated with the entity. The passage "communication entity associated with the entity" may refer to a communication entity that is part of the entity, or a communication entity that is not part of the entity and configured to trigger a control of the entity according to the command.

For example, in case the entity is a vehicle or a robot, the communication entity may be a communication unit of the vehicle or robot configured to (e.g. wirelessly) receive the command. In case the vehicle or the robot is an autonomous vehicle or autonomous robot, respectively, the communication unit may provide the received command to a control unit of the vehicle or the robot for controlling the vehicle or the robot according to the received command. In case the vehicle or the robot is operated by a human, the communication entity may provide the received command in the vehicle or the robot, such that the information of the command is output, e.g. visually output, auditory output, by a respective output unit, e.g. a screen, a loud speaker etc., of the vehicle or robot to the human operating the vehicle or the robot. This allows the human to operate the vehicle or robot according to the command.

Alternatively, in case the entity is a vehicle or a robot, the communication entity may be a communication unit that is not part of the vehicle or robot. For example, assuming that the vehicle or robot is operated by a human, a communication unit of the human (e.g. carried by the human), such as a mobile phone (e.g. smart phone), a pager, a headset etc., may be the communication unit associated with the vehicle or robot. Namely, the communication unit of the human may (e.g. wirelessly) receive the command and output, e.g. visually output, auditory output etc., the information of the command to the human triggering the human to operate the vehicle or robot according to the command. Thus, this allows triggering a control of the vehicle or robot according to the command.

Optionally, the method comprises monitoring a state of each of the entities; and computing the re-distribution of the charged batteries in the system using the monitored amount of charged batteries of each of the stations, the monitored demanded amount of charged batteries of each of the stations and the monitored state of each of the entities.

Monitoring a state of each of the entities may comprise determining at fixed time intervals (e.g. every minute, every five minute, every ten minute etc.) the state of each entity of the entities and optionally storing the determination results. Computing a re-distribution of the charged batteries in the system using the monitored amount of charged batteries of each of the stations, the monitored demanded amount of charged batteries of each of the stations and the monitored state of each of the entities may comprise computing at fixed time intervals (e.g. every minute, every five minute, every ten minute etc.) the re-distribution of the charged batteries in the system using the aforementioned information and optionally storing the computation results.

Monitoring the state of each of the entities may comprise monitoring a location of each of the entities, and/or an amount of charged batteries accommodated by the one or more battery slots of each of the entities.

This allows considering the charged batteries accommodated by the entities in the computation of the re-distribution of charged batteries in the system.

Optionally, computing the re-distribution of the charged batteries in the system using the monitored amount of charged batteries of each of the stations and the monitored demanded amount of charged batteries of each of the stations comprises balancing the distribution of the charged batteries such that the greater a demanded amount of charged batteries of a station the greater the amount of charged batteries of the station and vice versa.

That is, the method may allow monitoring the stations of the system and detecting among the stations imbalances in available charged batteries with regard to demanded charged batteries at the stations. Computing the re-distribution of the charged batteries in the system using the monitoring results (i.e. the monitored amount of charged batteries and monitored demanded amount of charged batteries of each of the stations) allows mitigating the unbalance.

Computing the re-distribution of the charged batteries in the system using the monitored amount of charged batteries of each of the stations and the monitored demanded amount of charged batteries of each of the stations may comprise determining (e.g. detecting), using the monitored amount of charged batteries and monitored demanded amount of charged batteries of each of the stations, among the stations imbalances in available charged batteries (i.e. in the amount of charged batteries) with regard to the demanded amount of charged batteries of the respective station, and planning a re-distribution of the charged batteries in the system using the determined imbalances.

For example, the method may comprise determining an imbalance in available charged batteries of a station with regard to the demanded amount of charged batteries of the station in case the amount of charged batteries of the station is smaller than the demanded amount of charged batteries of the station or the amount of charged batteries of the station is greater than the demanded amount of charged batteries of the station by an amount that is smaller than a threshold for the amount. For example, the aforementioned threshold for the amount may be set such that the station is configured to serve the demanded amount of charged batteries even in case this demanded amount may increase by a certain extent and optionally such that an amount of unused charged batteries of the station is smaller than a threshold for unused charged batteries, e.g. the amount of unused batteries of the station is a minimum.

Monitoring a demanded amount of charged batteries of each of the stations may comprise monitoring an actual amount of charged batteries demanded from the station and/or a predicated amount of charged batteries demanded from the station.

In other words, demands for charged batteries at the stations may be determined by different means. The demand for charged batteries at each of the stations may be predicted, i.e. a predicted amount of charged batteries demanded from each of the stations may be monitored. In addition or alternatively, an actual demand for charged batteries at each of the stations may be determined, i.e. the actual demanded amount of charged batteries of each of the stations may be monitored. The demanded amount of charged batteries of a station (i.e. the amount of charged batteries that are demanded from the station) may be predicted using machine learning and/or data mining technique(s) that use past data on the demanded amount of charged batteries of the station (i.e. past demand data) and relate the data to time data, such as time of the day, weekday and/or season. In addition or alternatively, the demanded amount of charged batteries of the station may be predicted by having a booking system where units requiring one or more charged batteries may inform (e.g. announce) about requirements for battery exchange (e.g. by booking one or more charged batteries for a certain point in time or time slot). The aforementioned units may comprise the entities and users of the entities. Monitoring the actual amount of charged batteries demanded from a station may comprise measuring the actual demand (e.g. measuring/determining an actual rate at which charged batteries leave the station). In other words, monitoring the actual amount of charged batteries demanded from the station may comprise measuring/determining the current state of the station with regard to charged batteries.

Optionally, computing the re-distribution of the charged batteries in the system using the monitored amount of charged batteries of each of the stations and the monitored demanded amount of charged batteries of each of the stations comprises classifying the stations into two classes, wherein a station of a first class of the two classes requires obtaining one or more charged batteries for fulfilling its demanded amount of charged batteries or has a demanded amount of charged batteries above a respective threshold and a station of a second class of the two classes has resources for providing one or more excess charged batteries. The aforementioned computing the re-distribution of the charged batteries in the system may optionally comprise generating a directed representation with each battery slot of each station being a node and an edge going from each excess charged battery of each station of the second class to each battery of each station of the first class having a charging level lower than a threshold for qualifying as a non-empty battery; assigning a cost to each edge of the directed representation, wherein the greater a distance the greater the cost and vice versa; and determining a distribution of the charged batteries using the directed representation with the assigned costs. The term "smaller" may be used as a synonym for the term "lower". The term "greater" may be used as a synonym for the term "higher".

The station(s) of the first class (i.e. first class station(s)) may be referred to as "destination station(s)" because they require one or more charged batteries and, thus, will be destination(s) for charged batteries during the re-distribution of the charged batteries. That is, a first class station may be a station that will have some shortage on charged batteries in future (e.g. a near future) or that has already a shortage on charged batteries. The station(s) of the second class (i.e. second class station(s)) may be referred to as "source station(s)" because they have resources for providing one or more excess charged batteries and, thus, will be source(s) for charged batteries during the re-distribution of the charged batteries. The terms "over-utilized station(s)" and "under-utilized station(s)" may be used for referring to the "station(s) of the first class" and "station(s) of the second class", respectively. The term "sink station" may be used as a synonym for the term "destination station".

Each station of the stations that has a monitored amount of charged batteries that is smaller than a threshold for the monitored amount of charged batteries may be classified as a first class station.

In addition or alternatively, each station of the stations that has a monitored demanded amount of charged batteries that is greater than a threshold for the monitored demanded amount of charged batteries may be classified as a first class station.

In addition or alternatively, each station of the stations, for which the monitored amount of charged batteries is smaller than the monitored demanded amount of charged batteries or is greater than the monitored demanded amount of charged batteries by an amount that is smaller than a threshold for the amount may be classified as a first class station.

In addition or alternatively, a station of the stations that has, among the stations, the smallest monitored amount of charged batteries may be classified as a first class station.

In addition or alternatively, a station of the stations that has, among the stations, the greatest monitored demanded amount of charged batteries may be classified as a first class station.

In addition or alternatively, a station of the stations, for which the monitored amount of charged batteries is smaller than the monitored demanded amount of charged batteries by an amount that is greatest among the stations or is greater than the monitored demanded amount of charged batteries by an amount that is smallest among the stations, may be classified as a first class station.

Optionally, two or more of the aforementioned criteria for classifying as a first class station need to be true for a station to be classified as a first class station.

Each station of the stations that has a monitored amount of charged batteries that is greater than a second threshold for the monitored amount of charged batteries may be classified as a second class station. The aforementioned threshold for the monitored amount of charged batteries and the second threshold for the monitored amount of charged batteries may be the same.

In addition or alternatively, each station of the stations that has a monitored demanded amount of charged batteries that is smaller than a second threshold for the monitored demanded amount of charged batteries may be classified as a second class station. The aforementioned threshold for the monitored demanded amount of charged batteries and the second threshold for the monitored demanded amount of charged batteries may be the same.

In addition or alternatively, each station of the stations, for which the monitored amount of charged batteries is greater than the monitored demanded amount of charged batteries by an amount that is greater than a threshold for the amount may be classified as a second class station.

In addition or alternatively, a station of the stations that has, among the stations, the greatest monitored amount of charged batteries may be classified as a second class station.

In addition or alternatively, a station of the stations that has, among the stations, the smallest monitored demanded amount of charged batteries may be classified as a second class station.

In addition or alternatively, a station of the stations, for which the monitored amount of charged batteries is greater than the monitored demanded amount of charged batteries by an amount that is greatest among the stations, may be classified as a second class station.

Optionally, two or more of the aforementioned criteria for classifying as a second class station need to be true for a station to be classified as a second class station.

The directed representation may comprise data representing a directed graph when the data are visualized. In other words, the directed representation does not necessarily refer to a graphic representation, but generally refers to data that mathematically express a relationship between the stations of the two classes, as described above.

A battery having a charging level lower than the threshold for qualifying as a non-empty battery may be referred to as "discharged battery" or "empty battery".

Determining the distribution (re-distribution) of the charged batteries using the directed representation with the assigned costs may comprise using linear programming on the directed representation to decide how to best distribute the charged batteries to the destination stations (i.e. first class stations) with regard to the charged battery demands of the destination stations and the costs (i.e. distances that need to be travelled) for the distribution. For this, the following criteria may be used: destination stations that are more urgent (e.g. a time until the destination station cannot serve charged battery demands is shortest or shorter than a time threshold) for being provided with charged batteries may have a higher priority and vice versa, and optionally distances to be travelled for re-distribution are to be minimized (the shorter the distances the better, as it save energy and may reduce time for re-distribution).

Distances may be computed on different aspects like, Euclidian distance, travel distance, travel time, fuel usage, accident risk probability or similarity to planned entity routes.

Optionally, the method comprises selecting the entity among the entities depending on at least one of a location, a planned route of movement and a movement behavior of each entity of the entities.

The movement behavior of an entity may comprise at least one of known stops of the entity, predicted stops of the entity, known speed of movement of the entity, predicted speed of movement of the entity. Taking into an account the location, a planned route of movement and/or the movement behavior for selecting the entity may improve speed and energy consumption of re-distribution of the charged batteries and for some cases, in which the entity may choose to obey to the command, it may improve probability that the selected entity accepts the command. For example, in case the command instructs the entity to transport one or more charged batteries from a first station (source station) to a second station (destination station), selecting one of the entities as the entity that is already near the first station and/or has a planned route of movement near or along the path from the first station to the second station may improve the speed and energy consumption for the re-distribution of the one or more batteries from the first station to the second station. In case there are two entities that qualify for the aforementioned re-distribution due to their respective location and/or their respective planned rout of movement, selecting the entity among the two entities dependent on the movement behavior of the two entities may improve speed of re-distribution. For example, in case a first entity of the two entities is known to stop multiple times on the route between the first station and a second station is less advantageous with regard to speed compared to a second entity of the two entities that is known to move without any stops. Therefore, selecting, due to the movement behavior, the second entity as the entity for performing the re-distribution of the one or more batteries from the first station to the second station may improve speed of the re-distribution (assuming that the two entities move at the same or similar speed).

Assuming that an entity is operated by a human, selecting the entity for the aforementioned re-distribution in case the location of the entity is near the first station and the planned route of movement of the entity lets the entity anyway pass by the second station without any detour increases the probability that the human accepts the commands, i.e. operates the entity in order to perform the re-distribution of the one or more batteries from the first station to the second station.

For example, selecting the entity among the entities depending on a planned route of movement may comprise computing a cost of re-planning the planned route of movement of each of the entities and considering only entities for the selection, for which the computed cost is lower than a threshold for the cost. Optionally, selecting the entity among the entities may comprise selecting the entity with the lowest computed cost. The cost may be with regard to an energy consumption and/or a time taken for the re-distribution. For example, the higher the energy consumption due to the re-planned route of movement the higher the cost and vice versa. The higher the time taken for the re-distribution due to the re-planned route of movement the higher the cost and vice versa.

Optionally, the command instructs the entity to perform at least one of the following: provide one or more charged batteries from a source station of the stations to a destination station of the stations; provide one or more charged batteries of its one or more battery slots to a destination station of the stations; and provide one or more charged batteries of its one or more battery slots to a destination entity of the entities.

Providing a charged battery to a station or an entity may be understood as swapping the charged battery with a battery of the station or the entity. The aforementioned battery of the station or the entity may be either a discharged battery (i.e. a battery with a charging level equal to or lower than a charging level threshold indicating a discharged state of the battery) or a battery with a charging level lower than a charging level of the charged battery. The terms "exchange" and "interchange" may be used as synonyms for the term "swap".

Optionally, the command instructs the entity to provide one or more charged batteries from a source station of the stations to a destination station of the stations, and the method comprises selecting the entity among the entities such that at least one of its location, its planned route of movement and its movement behavior is suited to at least one of a location of the source station and a location of the destination station.

The terms "to be suited" and "to suit" may be used as synonyms. For example, the location of the entity may be suited to the location of the source station in case the distance to be travelled or the travel time from the location of the entity to the location of the source station is shorter than a respective threshold. The planned route of movement of the entity may be suited to the location of the source station and the location of the destination station in case no re-planning of the planned route is necessary (i.e. the planned route passes by the source station and the destination station) and optionally the planned route is the shortest route with regard to distance and/or travel time between the source station and the destination station or is shorter than a threshold for distance and/or travel time. The planned route of movement of the entity may be suited to the location of the source station and the location of the destination station in case a re-planning of the planned route of movement necessary to perform the re-distribution of the one or more charged batteries from the source station to the destination station results in a total travel time from the current location of the entity via the location of the source station to the destination station that is shorter than a respective threshold and/or in an energy consumption that is lower than a respective threshold. The movement behavior of the entity may be suited to the location of the source station and the destination station in case there are no stopping of the entity when moving via the source station to the destination station or a number of stopping of the entity is smaller than a respective threshold. In addition or alternatively, the movement behavior of the entity may be suited to the location of the source station and the destination station in case the entity moves with a speed from the source station to the destination station that is higher than a respective threshold.

Optionally, two or more of the above described criteria need to be true so that at least one of the location, planned route of movement and movement behavior of the entity is suited to at least one of a location of the source station and a location of the destination station.

The method may comprise selecting the entity among the entities such that at least one of its location, its planned route of movement and its movement behavior is suited best to at least one of a location of the source station and a location of the destination station.

For example, the location of the entity may be suited best to the location of the source station in case the distance to be travelled or the travel time from the location of the entity to the location of the source station is shortest among the entities. The planned route of movement of the entity may be suited best to the location of the source station and the location of the destination station in case no re-planning of the planned route is necessary and the planned route is the shortest route with regard to distance and/or travel time between the source station and the destination station. The movement behavior of the entity may be suited best to the location of the source station and the destination station in case there are no stopping of the entity when moving via the source station to the destination station. In addition or alternatively, the movement behavior of the entity may be suited best to the location of the source station and the destination station in case the entity moves with a highest speed from the source station to the destination station among the entities.

Optionally, two or more of the above described criteria need to be true so that at least one of the location, planned route of movement and movement behavior of the entity is suited best to at least one of a location of the source station and a location of the destination station.

In addition or alternatively, the command may instruct the entity to provide one or more charged batteries of its one or more battery slots to a destination station of the stations, and the method may comprise selecting the entity among the entities such that at least one of its location, its planned route of movement and its movement behavior is suited to a location of the destination station.

For example, the location of the entity may be suited to the location of the destination station in case the distance to be travelled or the travel time from the location of the entity to the location of the destination station is shorter than a respective threshold. The planned route of movement of the entity may be suited to the location of the destination station in case no re-planning of the planned route is necessary (i.e. the planned route passes by the destination station) and optionally the planned route is the shortest route with regard to distance and/or travel time to the destination station or is shorter than a threshold for distance and/or travel time. The planned route of movement of the entity may be suited to the location of the destination station in case a re-planning of the planned route of movement necessary to provide the one or more charged batteries to the destination station results in a total travel time from the current location of the entity to the destination station that is shorter than a respective threshold and/or in an energy consumption that is lower than a respective threshold. The movement behavior of the entity may be suited to the location of the destination station in case there are no stopping of the entity when moving to the destination station or a number of stopping of the entity is smaller than a respective threshold. In addition or alternatively, the movement behavior of the entity may be suited to the location of the destination station in case the entity moves with a speed to the destination station that is higher than a respective threshold.

Optionally, two or more of the above described criteria need to be true so that at least one of the location, planned route of movement and movement behavior of the entity is suited to a location of the destination station.

The method may comprise selecting the entity among the entities such that at least one of its location, its planned route of movement and its movement behavior is suited best to a location of the destination station.

For example, the location of the entity may be suited best to the location of the destination station in case the distance to be travelled or the travel time from the location of the entity to the location of the destination station is shortest among the entities. The planned route of movement of the entity may be suited best to the location of the destination station in case no re-planning of the planned route is necessary and the planned route is the shortest route with regard to distance and/or travel time to the destination station. The movement behavior of the entity may be suited best to the location of the destination station in case there are no stopping of the entity when moving to the destination station. In addition or alternatively, the movement behavior of the entity may be suited best to the location of the destination station in case the entity moves with a highest speed to the destination station among the entities.

Optionally, two or more of the above described criteria need to be true so that at least one of the location, planned route of movement and movement behavior of the entity is suited best to a location of the destination station.

In addition or alternatively, the command may instruct the entity to provide one or more charged batteries of its one or more battery slots to a destination entity of the entities, and the method may comprise selecting the entity among the entities such that at least one of its location, its planned route of movement and its movement behavior is suited to a location of the destination entity.

For example, the location of the entity may be suited to the location of the destination entity in case the distance to be travelled or the travel time from the location of the entity to the location of the destination entity is shorter than a respective threshold. The planned route of movement of the entity may be suited to the location of the destination entity in case no re-planning of the planned route is necessary (i.e. the planned route passes by the destination entity or allows the two entities to meet at common location) and optionally the planned route is the shortest route with regard to distance and/or travel time to the destination entity or is shorter than a threshold for distance and/or travel time. The planned route of movement of the entity may be suited to the location of the destination entity in case a re-planning of the planned route of movement necessary to provide the one or more charged batteries to the destination entity results in a total travel time from the current location of the entity to the destination entity that is shorter than a respective threshold and/or in an energy consumption that is lower than a respective threshold. The movement behavior of the entity may be suited to the location of the destination entity in case there are no stopping of the entity when moving to the destination entity or a number of stopping of the entity is smaller than a respective threshold. In addition or alternatively, the movement behavior of the entity may be suited to the location of the destination entity in case the entity moves with a speed to the destination entity that is higher than a respective threshold.

Optionally, two or more of the above described criteria need to be true so that at least one of the location, planned route of movement and movement behavior of the entity is suited to a location of the destination entity.

The method may comprise selecting the entity among the entities such that at least one of its location, its planned route of movement and its movement behavior is suited best to a location of the destination entity.

For example, the location of the entity may be suited best to the location of the destination entity in case the distance to be travelled or the travel time from the location of the entity to the location of the destination entity is shortest among the entities. The planned route of movement of the entity may be suited best to the location of the destination entity in case no re-planning of the planned route is necessary and the planned route is the shortest route with regard to distance and/or travel time to the destination entity. The movement behavior of the entity may be suited best to the location of the destination entity in case there are no stopping of the entity when moving to the destination entity. In addition or alternatively, the movement behavior of the entity may be suited best to the location of the destination entity in case the entity moves with a highest speed to the destination entity among the entities.

Optionally, two or more of the above described criteria need to be true so that at least one of the location, planned route of movement and movement behavior of the entity is suited best to a location of the destination entity.

In the aforementioned examples of selecting an entity for providing one or more charged batteries of its one or more battery slots to a destination station or a destination entity, it is assumed that the entity is selected among entities that are capable of providing the one or more charged batteries because the one or more battery slots of the respective entity accommodates the one or more charged batteries.

The method may consider that the destination entity may not be stationary but move. For finding a distance between the location of an entity or station and the location of another station or entity the Euclidean distance may be computed. For example, a distance between the planned route of movement and the location of a source station, the location of a destination station and/or the location of a destination entity may be computed by computing the Euclidean distance.

Optionally, providing the one or more charged batteries from the source station to the destination station comprises swapping the one or more charged batteries of the source station with a corresponding amount of batteries of its one or more battery slots that each have a charging level lower than a charging level of each of the one or more charged batteries of the source station, and swapping the one or more charged batteries of the source station with the corresponding amount of batteries of the destination station that each have a charging level lower than a charging level of each of the one or more charged batteries of the source station.

Swapping or exchanging one or more batteries of an entity with the same amount of batteries of a station (e.g. a source station or destination station) allows keeping the number of batteries at the station constant and preventing shortage or agglomeration of batteries at one or more locations of the system.

In other words, in response to the command, the entity may move to the source station to pick up one or more charged batteries. This pickup may be realized by a swapping of the one or more charged batteries of the source station with a corresponding amount of batteries of the entity's one or more battery slots that each have a lower charging level compared to the one or more charged batteries. Next, the entity may move with the one or more charged batteries of the source station that are accommodated by the entity's one or more battery slots to the destination station to deliver the one or more charged batteries of the source station to the destination station. This deliver may be realized by a swapping of the one or more charged batteries accommodated by the entity's one or more battery slots with the corresponding amount of batteries of the destination station that each have a charging level lower than a charging level of each of the one or more charged batteries.

Optionally, in case the entity is electrically powered by the one or more batteries of its one or more battery slots and, after the aforementioned delivery at the destination station, the charging level of the one or more batteries accommodated by its one or more battery slots is not sufficient for electrically powering the entity, the entity may increase a charging level of the one or more batteries of its one or more battery slots as described below. For this, the entity may optionally be instructed accordingly.

Optionally, providing the one or more charged batteries of its one or more battery slots to the destination station comprises swapping the one or more charged batteries of its one or more battery slots with a corresponding amount of batteries of the destination station that each have a charging level lower than a charging level of each of the one or more charged batteries.

For example, in case the entity comprises one or more charged batteries (e.g. an amount of charged batteries greater than a respective threshold) that are accommodated by its one or more battery slots, the entity may be instructed to directly replace its one or more charged batteries with one or more batteries of a destination station (i.e. a station that requires obtaining one or more charged batteries for fulfilling its demanded amount of charged batteries or has a demanded amount of charged batteries above a respective threshold) that have a lower charging level compared to the one or more charged batteries.

Optionally, providing the one or more charged batteries of its one or more battery slots to the destination entity comprises swapping, at a location instructed by the command, the one or more charged batteries of its one or more battery slots with a corresponding amount of batteries that each have a charging level lower than a charging level of each of the one or more charged batteries.

In other words, a demand for charged batteries at stations may be reduced by instructing entities to swap batteries directly between each other.

Optionally, the method comprises selecting the location instructed by the command such that the location is nearest to at least one of the following: one or more stations of the stations that each require obtaining one or more charged batteries for fulfilling its demanded amount of charged batteries, and a station of the stations that requires obtaining the greatest amount of charged batteries for fulfilling its demanded amount of charged batteries among the stations.

The station(s) that each require obtaining one or more charged batteries for fulfilling its demanded amount of charged batteries correspond to "destination station(s)" or "first class station" described herein. Thus, the description with regard to destination station(s) and first class station(s) is correspondingly valid.

The method may comprise selecting the location instructed by the command such that the location is nearest to one or more stations of the stations for which a monitored amount of charged batteries is smaller than a threshold for the monitored amount of charged batteries. In addition or alternatively, the method may comprise selecting the location instructed by the command such that the location is nearest to one or more stations of the stations for which a monitored demanded amount of charged batteries is greater than a threshold for the monitored demanded amount of charged batteries. In addition or alternatively, the method may comprise selecting the location instructed by the command such that the location is nearest to one or more stations of the stations for which the monitored amount of charged batteries is smaller than the monitored demanded amount of charged batteries or is greater than the monitored demanded amount of charged batteries by an amount that is smaller than a threshold for the amount.

In addition or alternatively, the method may comprise selecting the location instructed by the command such that the location is nearest to at least one of the following: a station of the stations having, among the stations, the smallest monitored amount of charged batteries; a station of the stations having, among the stations, the greatest monitored demanded amount of charged batteries; and a station of the stations for which the monitored amount of charged batteries is smaller than the monitored demanded amount of charged batteries by an amount that is greatest among the stations or is greater than the monitored demanded amount of charged batteries by an amount that is smallest among the stations.

Optionally, two or more of the aforementioned criteria for selecting the location instructed by the command need to be true for a location to be selected.

Optionally, the method comprises, after the entity has performed at least the part of the computed re-distribution of the one or more of the charged batteries in the system, increasing a charging level of one or more batteries of the one or more battery slots of the entity by instructing, depending on the monitored amount of charged batteries of each of the stations and the monitored demanded amount of charged batteries of each of the stations, the entity to swap its battery or at least one of its batteries with a corresponding amount of batteries having a higher charging level of a source station of the stations.

Optionally, the method comprises selecting the source station among the stations such that at least one of a location, a planned route of movement and a movement behavior of the entity suits a location of the source station.

For example, the location of the entity may suit the location of the source station in case the distance to be travelled or the travel time from the location of the entity to the location of the source station is shorter than a respective threshold. The planned route of movement of the entity may suit the location of the source station in case no re-planning of the planned route is necessary (i.e. the planned route passes by the source station) and optionally the planned route is the shortest route with regard to distance and/or travel time to the source station or is shorter than a threshold for distance and/or travel time. The planned route of movement of the entity may suit the location of the source station in case a necessary re-planning of the planned route of movement for reaching the source station results in a total travel time from the current location of the entity to the source station that is shorter than a respective threshold and/or in an energy consumption that is lower than a respective threshold. The movement behavior of the entity may suit the location of the source station in case there are no stopping of the entity when moving to the source station or a number of stopping of the entity is smaller than a respective threshold. In addition or alternatively, the movement behavior of the entity may suit the location of the source station in case the entity moves with a speed to the source station that is higher than a respective threshold.

Optionally, two or more of the above described criteria need to be true so that at least one of the location, planned route of movement and movement behavior of the entity suits to a location of the source station.

The method may comprise selecting the source station among the stations such that at least one of a location, a planned route of movement and a movement behavior of the entity suits best a location of the source station.

For example, the location of the entity may suit best the location of the source station in case the distance to be travelled or the travel time from the location of the entity to the location of the source station is shortest among the entities. The planned route of movement of the entity may suit best the location of the source station in case no re-planning of the planned route is necessary and the planned route is the shortest route with regard to distance and/or travel time to the source station. The movement behavior of the entity may be suited best to the location of the source station in case there are no stopping of the entity when moving to the source station. In addition or alternatively, the movement behavior of the entity may suit best to the location of the source station in case the entity moves with a highest speed to the source station.

Optionally, two or more of the above described criteria need to be true so that at least one of the location, planned route of movement and movement behavior of the entity suits best to a location of the source station.

Optionally, the method comprises selecting the source station among the stations such that at least one of the following is true: the source station has resources for providing one or more charged batteries, the source station has resources for providing the greatest amount of charged batteries among the stations, a distance between the source station and the destination station is smaller than a threshold for the distance, and a distance between the source station and the destination station is a minimum distance among distances from the source station.

The method may comprise selecting the source station among the stations such that at least one of the following is true: the source station has a monitored amount of charged batteries that is greater than a threshold for the monitored amount of charged batteries; the source station has a monitored demanded amount of charged batteries that is smaller than a threshold for the monitored demanded amount of charged batteries; and for the source station the monitored amount of charged batteries is greater than the monitored demanded amount of charged batteries by an amount that is greater than a threshold for the amount.

In addition or alternatively, the method may comprise selecting the source station among the stations such that at least one of the following is true: the source station has, among the stations, the greatest monitored amount of charged batteries; the source station has, among the stations, the smallest monitored demanded amount of charged batteries; and for the source station the monitored amount of charged batteries is greater than the monitored demanded amount of charged batteries by an amount that is greatest among the stations.

Optionally, the method comprises selecting the destination station among the stations such that the destination station requires obtaining one or more charged batteries for fulfilling its demanded amount of charged batteries, and/or the destination station requires obtaining the greatest amount of charged batteries for fulfilling its demanded amount of charged batteries among the stations.

The method may comprise selecting the destination station among the stations such that at least one of the following is true: the destination station has a monitored amount of charged batteries that is smaller than a threshold for the monitored amount of charged batteries; the destination station has a monitored demanded amount of charged batteries that is greater than a threshold for the monitored demanded amount of charged batteries; and for the destination station the monitored amount of charged batteries is smaller than the monitored demanded amount of charged batteries or is greater than the monitored demanded amount of charged batteries by an amount that that is smaller than a threshold for the amount.

In addition or alternatively, the method may comprise selecting the destination station among the stations such that at least one of the following is true: the destination station has, among the stations, the smallest monitored amount of charged batteries; the destination station has, among the stations, the greatest monitored demanded amount of charged batteries; and for the destination station the monitored amount of charged batteries is smaller than the monitored demanded amount of charged batteries by an amount that is greatest among the stations or is greater than the monitored demanded amount of charged batteries by an amount that is smallest among the stations.

Optionally, a charged battery is a fully charged battery, or a battery that has a charging level higher than a charging level threshold.

The charging level threshold may be determined based on the units to be supplied with charged batteries by the stations, past mobility data and/or a simulation of the mobility. The threshold for qualifying as a non-empty battery may be lower than or equal to the aforementioned charging level threshold. The aforementioned charging level threshold and the threshold for qualifying as a non-empty battery may be referred to as "first charging level threshold" and "second charging threshold", respectively.

Optionally, computing the re-distribution of the charged batteries in the system using the monitored amount of charged batteries of each of the stations and the monitored demanded amount of charged batteries of each of the stations comprises performing at least one of linear programming, mixed-integer programming, bipartite matching, shortest-path algorithms, and greedy heuristics, for selecting the entity among the entities and determining a most suitable re-distribution of the charged batteries with regard to the monitored amount of charged batteries of each of the stations and the monitored demanded amount of charged batteries of each of the stations.

Optionally, the method comprises providing the command to the communication entity in response to receiving an acknowledgement from the communication entity after selecting the entity among the entities.

In the light of the above, the method of the first aspect allows monitoring demand and capabilities of charged batteries at the stations and triggering a re-location of charged batteries from under-utilized stations (source stations) to stations with high demand for charged batteries (destination stations).

In order to achieve the computer-implemented method according to the first aspect of the present invention, some or all of the above described optional features may be combined with each other.

According to a second aspect of the invention, a system is provided. The system comprises locally distributed stations for providing exchange batteries, entities each comprising one or more battery slots, and a management entity. The management entity is configured to perform the computer-implemented method according to the first aspect of the invention, as described above.

The above description with regard to the computer-implemented method according to the first aspect of the present invention is correspondingly valid for the system according to the second aspect of the present invention. For example, the above description of the system, stations and entities is correspondingly valid for the entities and stations of the system according to the second aspect and the system according to the second aspect. The description with regard to the system according to the second aspect of the present invention is correspondingly valid for the computer-implemented method according to the first aspect of the present invention.

The stations may be referred to as "battery exchange stations" or "battery swapping stations". Each station may comprise battery slots for storing batteries. The greater the number of battery slots of a station the greater the number of batteries that may be stored by the station. One or more stations, optionally each station, of the stations may be configured to charge the batteries stored at the station or a part of the batteries stored at the station.

The management entity may be a central management instance of the system. The management entity may be implemented by software and/or hardware. For example, the management entity is a server. The management entity (e.g. the server) may be central merely in a control sense. For example, the management entity (e.g. server) may be distributed over several machines or instances for robustness and availability.

The management entity and the stations may communicate with each other e.g. via wireless communication and/or wired communication. For example, the communication may be via the internet. The communication may be secured by any known encryptions means. The management entity and the entities may communicate with each other e.g. via wireless communication and/or wired communication. For example, the communication may be via the internet. The communication may be secured by any known encryptions means. For a communication between the management entity and the entities, each of the entities may be associated with a communication entity. The description of such a communication entity with regard to the method of the first aspect is correspondingly valid. That is, the communication entity of a respective entity may be a part of the entity, or may not be part of the entity and configured to trigger a control of the entity according to a command received from the management entity.

Thus, a communication between the management entity and an entity may be a communication between the management entity and the entity itself (e.g. in case the entity is a vehicle or robot and communication is done with a communication entity that is part of the vehicle or robot) or a communication between the management entity and a user of the entity (e.g. in case the entity is a vehicle or robot operated by a human and communication is done with a mobile phone of the user instructing the human on how to operate the vehicle or robot).

In case an entity is an autonomous entity, such as an autonomous vehicle or robot, the communication between the management entity and the entity may be done via a specific communication protocol, which may work over the internet. For this the autonomous entity may be configured to use a wireless communication hardware, such as mobile internet or a wireless local area network (W-LAN), e.g. WiFi. In case the entity is operated by a human, a communication between the human and the management entity may be performed via a mobile phone (e.g. dedicated app on a smartphone, e.g. with login), token or a web interface (e.g. with login) of a user end device, such as a notebook, smartphone or PC. Optionally, specific devices for communication, such as pagers, may be used for the communication between the management entity and the human operating an entity.

Each of the stations may provide (e.g. at fixed time intervals, such as every minute) to the management unit information used by the management unit to perform the computer-implemented method of the first aspect. For example, the provided information may comprise the amount of charged batteries of the respective station and the demanded amount of charged batteries of the respective station. The provided information may optionally comprises further data of the respective station, such as one or more of location data (e.g. GPS data) of the station, opening hours of the station, maximum number of batteries that may be stored at the station and a maximum combined charging power of the batteries stored at the station. In addition, or alternatively, the provided information may comprise at least one of the following information: amount of batteries of the station without failure (i.e. amount of functional batteries), a charging level of each battery of the station and planned or predicted charging level of the batteries of the station for one or more time periods in the future, such as for the next hour, next two hours, next four hours and/or next day.

Each of the entities may provide (e.g. at fixed time intervals, such as every minute) to the management unit information used by the management unit to perform the computer-implemented method of the first aspect. For example, each entity of the entities may provide information on the state of the respective entity to the management entity. The information on the state of the respective entity may comprise a location of the entity and/or an amount of charged batteries accommodated by the one or more battery slots of the entity. In addition, or alternatively, each entity of the entities may provide a planned route of movement of the entity and/or a movement behavior of the entity.

The management entity may be configured to store data received from outside, e.g. from stations and/or entities, and/or data that are computed by the management entity (e.g. when performing the method of the first aspect). The management entity may be configured to use stored data (e.g. at least one of the aforementioned stored data) and/or received data (e.g. received from stations and/or entities) for performing the method of the first aspect.

Optionally, the management entity may, according to the computed re-distribution of charged batteries, instruct an entity to perform the following: The entity moves to a source station to pick up one or more charged batteries, wherein the pickup may be performed by battery swapping of the one or more charged batteries of the source station with one or more batteries of the entity that have a lower charging level compared to the one or more charged batteries. Next the entity moves with the one or more charged batteries to a destination station to deliver the one or more charged batteries to the destination station. This delivery may be performed by battery swapping of the one or more charged batteries of the entity with one or more charged batteries of the destination station that have a lower charging level compared to the one or more charged batteries.

In case the entity is electrically powered by the one or more batteries accommodated by its one or more battery slots, the entity may drive to a source station (the aforementioned source station or another source station, e.g. the nearest source station) for getting one or more charged batteries in case the one or more batteries of its battery slots (including the one or more batteries received at the destination station) have a charging level that is not sufficient for electrically powering the entity. The aforementioned increase of charging level of the one or more batteries of the one or more battery slots of the entity may be instructed and/or supported by the management entity.

Optionally, the management entity may, according to the computed re-distribution of charged batteries, instruct an entity with one or more charged batteries to directly swap at least one of its one or more charged batteries at a destination station (e.g. with a great demanded amount of charged batteries and a small or no amount of charged batteries). Afterwards, the entity may be configured to move to another station (e.g. a source station) to receive one or more charged batteries as a replacement for the one or more charged batteries directly provided to the aforementioned destination station. Alternatively, the entity may be configured to wait at the aforementioned destination station until one or more excess charged batteries are available again, i.e. until the destination station has become a source station. This may be done for example for entities that are known to take a break near a destination station anyway and, thus, are not bothered by waiting for recharge. This may also include entities that stop their operation for that day and resume the next day or later. The aforementioned action of the entity may be instructed and/or supported by the management entity.

Optionally, the management entity may, according to the computed re-distribution of charged batteries, instruct an entity with one or more charged batteries to directly swap at least one of its one or more charged batteries with another entity. This may reduce the burden of delivering charged batteries at one or more stations, because entities may be provided with charged batteries directly from other entities. For example, for this the management entity may be configured to compute a location which both entities may easily reach (e.g. minimize combined distance or travel time). The aforementioned action of the entity may be instructed and/or supported by the management entity.

Optionally, the entities comprise at least one of one or more autonomous vehicles, one or more autonomous robots, one or more vehicles each operated by a human, and one or more robots each operated by a human.

The vehicles may comprise at least one of one or more scooters, one or more motorcycles, one or more bicycles, one or more boats, one or more cars, one or more buses, one or more trucks, one or more planes, and one or more flying drones. In other words, the vehicle may be configured to move on land, on water and/or in the air. The one or more vehicles may be one or more electrical vehicles, i.e. electrical powered vehicles. The one or more robots may be for example one or more delivery robots and/or one or more city guide robots. The one or more robots may be one or more electrical robots, i.e. electrical powered robots. The entities may be configured to move (e.g. between at least two stations of the stations, near one or more stations and/or passing by one or more stations). The entities may be referred to as "mobile entities" or "movable entities".

The one or more battery slots of each entity of the entities may each be configured to accommodate a battery, and at least one entity of the entities may be configured to use electrical energy from its one or more batteries accommodated in the slot(s) for propulsion of the entity and/or electrically powering the entity. Optionally, each entity of the entities is configured to use electrical energy from its one or more batteries accommodated in the slot(s) for propulsion of the entity and/or electrically powering the entity.

At least one entity of the entities may be configured to transport, using its one or more battery slots, one or more batteries without using electrically energy of the transported one or more batteries. Optionally each entity of the entities is configured to transport, using its one or more battery slots, one or more batteries without using electrically energy of the transported one or more batteries.

Optionally, the management entity and the entities are configured to communicate with each other using at least one of a smartphone app, a web-interface, a dedicated communication protocol over the internet and one or more communication devices.

Optionally, the entities are each configured to authorize themselves at the stations using at least one of a smartphone app, web-interface and one or more tokens.

That is, a release of batteries to an entity at each of the stations may be authorized by means of an app, web interface and/or tokens (e.g. wearable tokens) of the entity or associated with the entity (e.g. of a human operating the entity). The aforementioned mechanism to grant permission for a battery swapping allows preventing misuse and theft of charged batteries in the system.

An entity (such as autonomous entities as well as humans operating entities) receiving a command from the management entity to perform at least a part (e.g. a specific task) of the computed re-distribution of the charged batteries in the system may refuse to obey to the command. In this case, the management entity may be configured to contact another suitable entity. In order to improve the likelihood of acceptance of a command received from the management entity, humans operating entities may be given incentives like reduced swapping cost rates or virtual points they can use for getting prioritized for battery swapping in the future. In addition, there may be dedicated entities that are primarily or solely responsible for the battery re-distribution, i.e. battery re-location. For example, humans operating such dedicated entities may be paid for performing the re-distribution.

Since the entities of the system may move in some vicinity of the stations of the system anyway, the system does not require investing in extra infrastructure for re-distributing the charged batteries.

The system according to the second aspect achieves the same advantages as the computer-implemented method according to the first aspect.

In order to achieve the system according to the second aspect of the present invention, some or all of the above described optional features may be combined with each other.

According to a third aspect of the invention, a data processing apparatus is provided. The data processing apparatus comprises means for carrying out the computer-implemented method according to the first aspect of the present invention.

According to a fourth aspect of the invention, a computer program is provided. The computer program comprises instructions which, when the program is executed by a computer, cause the computer to carry out the computer-implemented method according to the first aspect of the present invention. The term "computer program product" may be used as a synonym for the term "computer program".

According to a fifth aspect of the invention a computer-readable medium is provided. The computer-readable medium comprises instructions which, when executed by a computer, cause the computer to carry out the computer-implemented method according to the first aspect of the present invention. The term "computer-readable storage medium" may be used as a synonym for the term "computer-readable medium". The computer-readable medium may be a non-transitory storage medium.

The data processing apparatus according to the third aspect, the computer program according to the fourth aspect, and the computer-readable medium according to the fifth aspect each achieve the same advantages as the computer-implemented method according to the first aspect.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed Figures, in which
- **Figure 1**: shows an example of a computer-implemented method according to an embodiment of the present invention for controlling a distribution of charged batteries in a system;
- **Figure 2**: shows an example of a system according to an embodiment of the present invention;
- **Figure 3**: shows an example of a directed representation that may be generated by an example of a computer-implemented method according to an embodiment of the present invention for controlling a distribution of charged batteries in a system;
- **Figure 4**: shows an example of a result of a computation of re-distribution of charged batteries that may be generated, using the directed representation of Figure 3, by an example of a computer-implemented method according to an embodiment of the present invention for controlling a distribution of charged batteries in a system; and
- **Figure 5**: shows an example of a computer-implemented method according to an embodiment of the present invention for controlling a distribution of charged batteries in a system.

In the Figures, corresponding elements have the same reference signs.

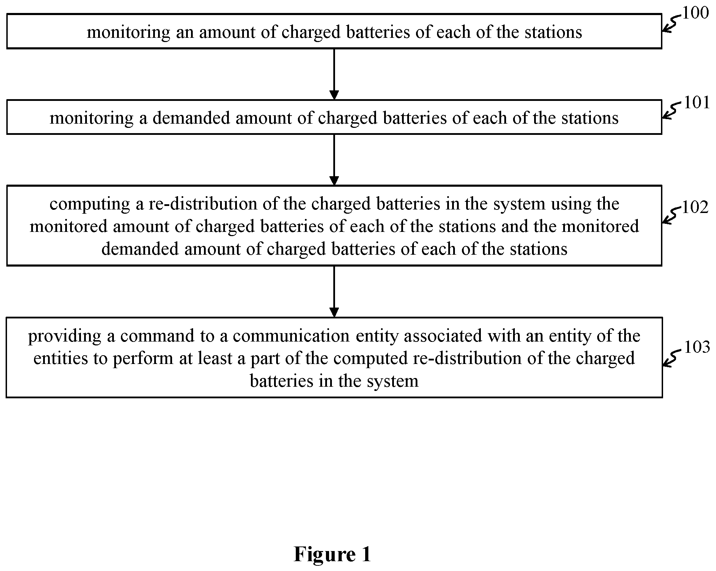

**Figure 1** shows an example of a computer-implemented method according to an embodiment of the present invention for controlling a distribution of charged batteries in a system. The method of Figure 1 is an example of the computer-implemented method according to the first aspect of the present invention. Thus, the description of the computer-implemented method according to the first aspect is correspondingly valid for the method of Figure 1.

The method of Figure 1 is a computer-implemented method for controlling a distribution of charged batteries in a system. The system comprises locally distributed stations for providing exchange batteries, and entities each comprising one or more battery slots. The method comprises, in a step 100, monitoring an amount of charged batteries of each of the stations; and, in a step 101, monitoring a demanded amount of charged batteries of each of the stations. The order of the steps 100 and 101 may be different than shown in Figure 1 or these steps may be simultaneously performed. The method comprises, in a step 102, computing a re-distribution of the charged batteries in the system using the monitored amount of charged batteries of each of the stations and the monitored demanded amount of charged batteries of each of the stations. The steps 100, 101 and 102 may be performed simultaneously, wherein in the step 102 stored data monitored in the steps 100 and 101 may be used. The method comprises, in a step 103, providing a command to a communication entity associated with an entity of the entities to perform at least a part of the computed re-distribution of the charged batteries in the system.

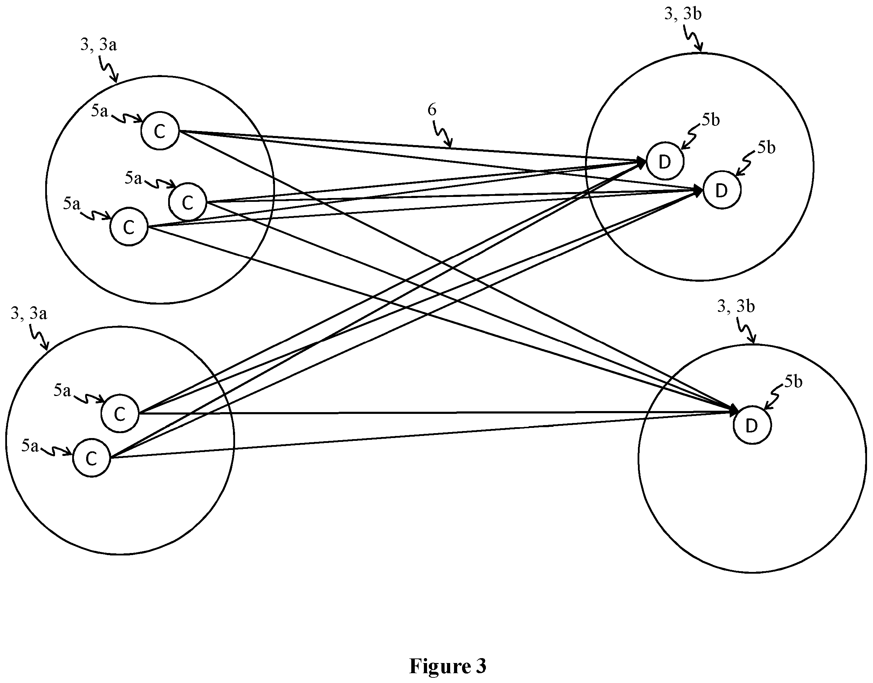

For further information on the method of Figure 1 reference is made to the description of the method according to the first aspect of the present invention and to the description of Figures 3, 4 and 5.

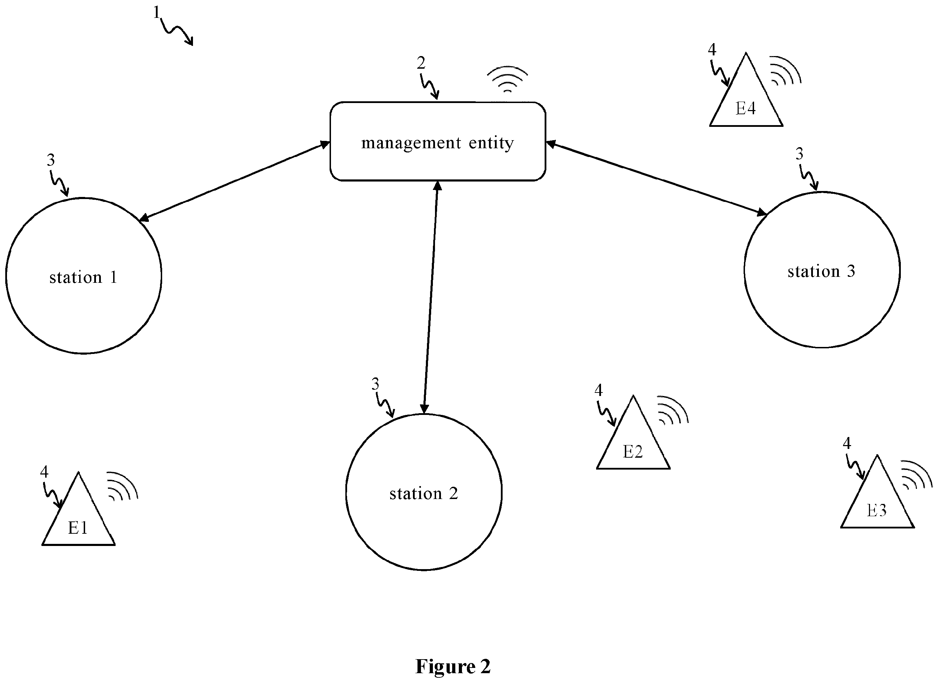

**Figure 2** shows an example of a system according to an embodiment of the present invention. The system of Figure 2 is an example of the system according to the second aspect of the present invention. Thus, the description of the system according to the second aspect is correspondingly valid for the system of Figure 2.

The system 1 of Figure 2 comprises locally distributed stations 3 for providing exchange batteries, entities 4 each comprising one or more battery slots, and a management entity 2. The management entity 2 is configured to perform the computer-implemented method according to the first aspect of the invention. The number of stations 3 and entities 4 shown in Figure 2 is only by way of example and may be different. The description of Figure 2 is correspondingly valid in case of different numbers of stations and/or entities. As shown in Figure 2, the stations 3 and the management entity 2 may communicate with each other, e.g. using a wired communication and/or a wireless communication. The entities 4 and the management entity 2 may communicate with each other, using a wired communication (not shown in Figure 2) and/or a wireless communication (as indicated in Figure 2). Optionally, the stations 3 and the entities 4 may communicate with each other (not shown in Figure 2), e.g. using a wired communication and/or a wireless communication. The present invention is not limited to a specific form of communication, e.g. communication technology.

For example, the entities E1, E2, E3 and E4 may be entities operated by users, wherein the communication between the management unit 2 and the respective entity 4 may be done via a communication unit (e.g. a mobile phone) of the user operating the respective entity 4. The entities E1, E2, E3 and E4 may be e.g. scooters of a food delivery service or scooters of private users. The users of the entities E1, E2, E3 and E4 may agree to share their planned route of movement data with the management entity 2 and, thus, may be asked by the management entity 2 to deliver charged batteries from one station 3 to another station 3 and, thus, perform at least part of a re-distribution of charged batteries that may be performed (e.g. managed or controlled) by the management entity 2 by performing the method according to the first aspect of the invention. In the case of private users of the entities E1, E2, E3 and E4 the users and, thus, the respective entities do not need to obey or follow instructions from the management entity 2. However, private users may be encouraged to obey to commands received from the management entity 2 with a bonus point program, which they can use to get priority battery swaps at the stations 3. Similarly owners of a fleet of entities 4 may agree to perform a certain number of battery deliveries per day in exchange for a higher priority with regard to battery swapping at the stations 3.

For further information on the system 1 of Figure 2 reference is made to the description of the system according to the second aspect of the present invention.

**Figure 3** shows an example of a directed representation that may be generated by an example of a computer-implemented method according to an embodiment of the present invention for controlling a distribution of charged batteries in a system. The method may be the method of Figure 1. Thus, the description of the computer-implemented method of Figure 1 and the computer-implemented method according to the first aspect is correspondingly valid for the method of Figure 3.

With regard to Figure 3, it is assumed that the system comprises four stations 3, wherein two stations 3 are source stations 3a, i.e. they each have resources for providing excess charged batteries, and two stations 3 are destination stations 3b, i.e. they each require obtaining one or more charged batteries. In Figure 3, for each source station 3a the excess charged batteries 5a are shown and for each destination station 3b discharged batteries 5b are shown. The number of stations, number of source stations, number of destination stations, number and distribution of charged batteries as well as number and distribution of discharged batteries shown in Figure 3 is only by way of example and, thus, may be different. The description of Figure 3 is correspondingly valid in the aforementioned case.

As exemplarily shown in Figure 3, for computing the re-distribution of the charged batteries 5a in the system using the monitored amount of charged batteries of each of the stations 3 and the monitored demanded amount of charged batteries of each of the stations 3, the stations 3 may be classified into two classes, wherein a station 3b of a first class of the two classes requires obtaining one or more charged batteries for fulfilling its demanded amount of charged batteries or has a demanded amount of charged batteries above a respective threshold (such station may be referred to as destination station), and a station 3a of a second class of the two classes has resources for providing one or more excess charged batteries 5a (such station may be referred to as source station). A directed representation (e.g. directed graph) may be generated, wherein each battery slot of each station 3 is a node and an edge 6 goes from each excess charged battery 5a of each station 3a of the second class to each battery 5b of each station 3b of the first class having a charging level lower than a threshold for qualifying as a non-empty battery (i.e. to each discharged battery of each first class station). A cost may then be assigned to each edge 6 of the directed representation, wherein the greater a distance the greater the cost and vice versa (not shown in Figure 3).

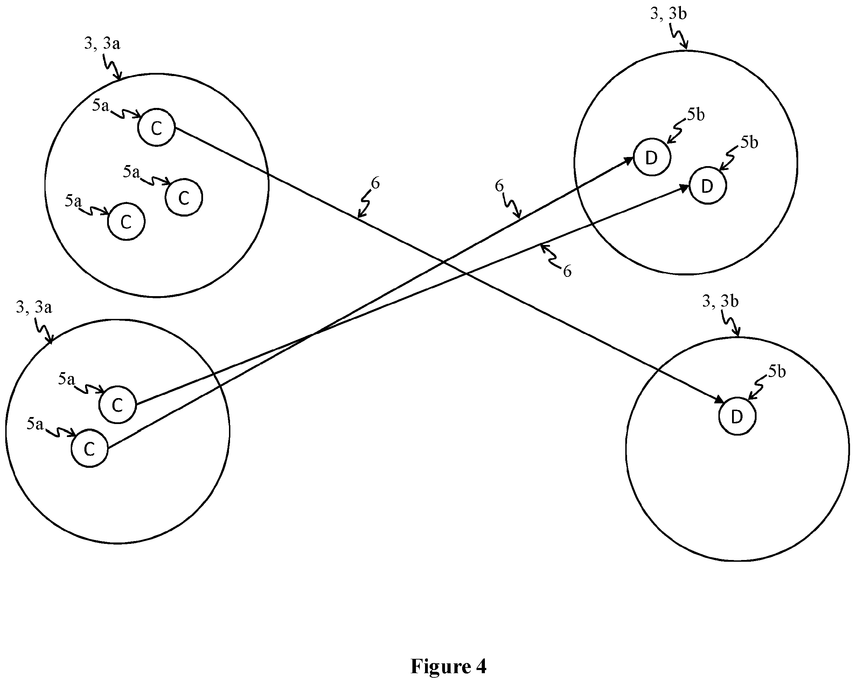

A linear programming may be used on the directed representation of Figure 3 to decide how to best distribute the charged batteries 5a to the first class destinations 3b (i.e. destination stations). Figure 4 shows an example result of an assignment of the charged batteries 5a to the first class stations 3b computed by the optimization by using a linear programming on the directed representation of Figure 3. That is, **Figure 4** shows an example of a result of a computation of re-distribution of charged batteries that may be generated, using the directed representation of Figure 3, by an example of a computer-implemented method according to an embodiment of the present invention for controlling a distribution of charged batteries in a system. The description of Figure 3 is correspondingly valid for the method of Figure 4.

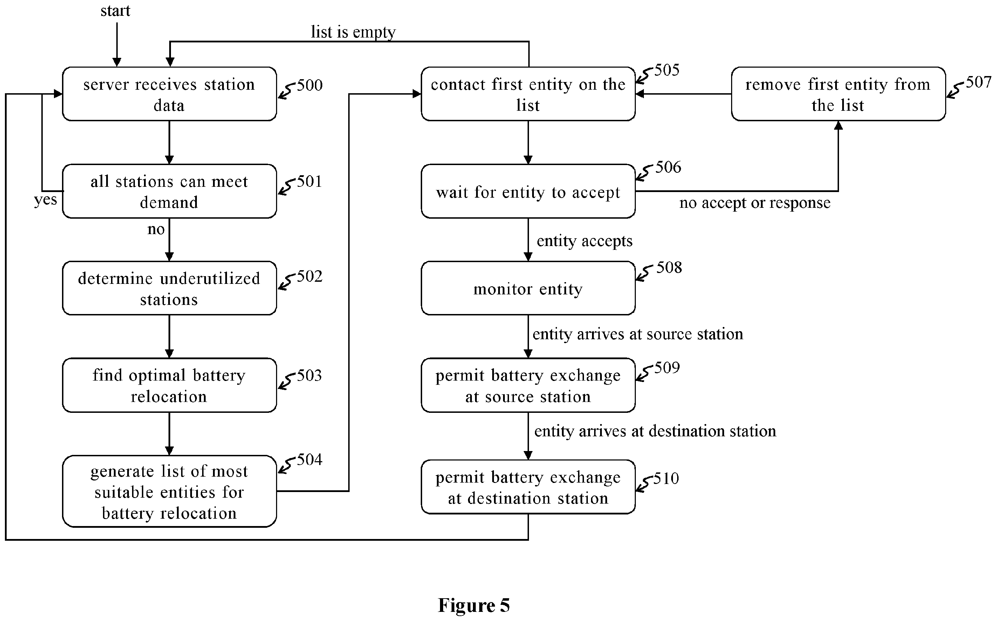

According to the computer-implemented method for controlling the distribution of the charged batteries 5a in the system, after the assignment has been computed, the planned routes of movement of the entities of the system may be compared with the battery assignment result of Figure 4. The entities may be ranked with respect to closeness of its planned route of movement to a pair of a first class station 3b and a second class station 3a. Furthermore, it may optionally be checked that the entity may complete the planned route of movement with the discharged battery 5b received at the first class station 3b in response to providing a charged battery 5a from the second class station 3a to the first class station 3b and reach another station 3 afterwards. An example of a method for controlling a re-distribution of charged batteries may be described with regard to Figure 5.

**Figure 5** shows an example of a computer-implemented method according to an embodiment of the present invention for controlling a distribution of charged batteries in a system. The method of Figure 5 is an example of an implementation of the computer-implemented method of Figure 1. Thus, the description of the computer-implemented method of Figure 1 and the computer-implemented method according to the first aspect is correspondingly valid for the method of Figure 5.

For describing Figure 5, it is assumed that a management unit being a server performs the method for controlling a distribution of charged batteries in a system. The description of Figure 5 is correspondingly valid in case of a different implementation of the management entity. The system may be a system according to the second aspect, such as the system of Figure 2.

As shown in Figure 5, in a step 500 the server may receive station data from the battery swapping stations of the system and, using the received data, monitor the amount of charged batteries of each station of the system and the demanded amount of charged batteries of each station of the system. In a step 501 following the step 500, the server may check whether all stations of the system may meet the demand (e.g. predicted demand) for charged batteries at the respective station. In case this is true (i.e. "yes" at step 501), the method returns to step 500. Otherwise (i.e. "no" at step 501), the method proceeds to step 502. In step 502, the server may classify the stations of the system into first class stations (i.e. destination stations or over-utilized stations) and second class stations (i.e. source stations or under-utilized stations). This may be done as outlined with regard to the method according to the first aspect of the invention. In a next step 503, the server may find an optimal re-distribution (i.e. re-location) of the charged batteries in the system. For example, this may be done as exemplarily described with regard to Figures 3 and 4. In a next step 504, the server may generate a list of most suitable entities of the entities of the system for the computed optimal re-distribution of the charged batteries in the system. This may be done as described above. In a following step 505, the server may contact a first entity on the list, i.e. the server may provide a command to the first entity on the list to perform at least a part of the computed re-distribution of the charged batteries. For example, in case the first entity is operated by a user, the server may inform the user about the command e.g. via an app on the user's mobile phone. In a next step 506 the server waits for the first entity to accept the command from the server e.g. by transmitting an acknowledgement to the server. In case the entity accepts the command (e.g. within a certain time period, such as two minutes) the method continues at step 508. In case the entity does not accept the command or there is no response received by the server (e.g. within a certain time period, such as two minutes), the method continues at step 507. In the step 507, the server removes the first entity from the list and the method continues at step 505. In the step 508, the server may monitor the entity for determining whether the entity performs a charged battery re-distribution according to the command send to the entity. For example, the command may instruct the entity to re-locate a charged battery from a source station (second class station) to a destination station (first class station). Thus, in the step 508, the server may monitor whether the entity delivers the charged battery from the source station to the destination station. When the entity arrives at the source station the assigned charged battery is released from its slot in the source station, and replaced with a battery from the entity. For this, optionally in a step 509, the server or the source station may permit the battery exchange at the source station. For example, the release of the battery to the entity at the source station may be authorized by means of an app, web interface and/or tokens (e.g. wearable tokens) of the entity or a user operating the entity. Next the entity, carrying the charged battery provided by the source station, moves to the destination station. When the entity arrives at the destination station the assigned discharged battery is released from the destination station's slot and replaced with the charged battery from the source station, carried by the entity. For this, optionally in a step 510, the server or the destination station may permit the battery exchange at the destination station. For example, the release of the battery to the entity at the destination station may be authorized by means of an app, web interface and/or tokens (e.g. wearable tokens) of the entity or a user operating the entity. The method may continue at step 500.

The method of Figure 5 allows increasing availability of charged batteries at the stations of the system. For further details on the method Figure 5 reference is made to the description of the method according to the first aspect of the invention.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A computer-implemented method for controlling a distribution of charged batteries in a system comprising locally distributed stations for providing exchange batteries and entities each comprising one or more battery slots, wherein the method comprises
- monitoring (100) an amount of charged batteries of each of the stations;
- monitoring (101) a demanded amount of charged batteries of each of the stations;
- computing (102) a re-distribution of the charged batteries in the system using the monitored amount of charged batteries of each of the stations and the monitored demanded amount of charged batteries of each of the stations; and
- providing (103) a command to a communication entity associated with an entity of the entities to perform at least a part of the computed re-distribution of the charged batteries in the system
**characterized in that**
the command instructs the entity to perform at least one of the following:
- provide one or more charged batteries from a source station of the stations to a destination station of the stations;
- provide one or more charged batteries of its one or more battery slots to a destination station of the stations; and
- provide one or more charged batteries of its one or more battery slots to a destination entity of the entities.

2. The computer-implemented method according to claim 1, the method comprising
- monitoring a state of each of the entities; and
- computing the re-distribution of the charged batteries in the system using the monitored amount of charged batteries of each of the stations, the monitored demanded amount of charged batteries of each of the stations and the monitored state of each of the entities.

3. The computer-implemented method according to claim 2, wherein monitoring the state of each of the entities comprises monitoring
- a location of each of the entities, and/or
- an amount of charged batteries accommodated by the one or more battery slots of each of the entities.

4. The computer-implemented method according to any one of the previous claims, wherein computing the re-distribution of the charged batteries in the system using the monitored amount of charged batteries of each of the stations and the monitored demanded amount of charged batteries of each of the stations comprises
- balancing the distribution of the charged batteries such that the greater a demanded amount of charged batteries of a station the greater the amount of charged batteries of the station and vice versa.

5. The computer-implemented method according to any one of the previous claims, wherein monitoring a demanded amount of charged batteries of each of the stations comprises
- monitoring an actual amount of charged batteries demanded from the station and/or a predicted amount of charged batteries demanded from the station.

6. The computer-implemented method according to any one of the previous claims, wherein computing the re-distribution of the charged batteries in the system using the monitored amount of charged batteries of each of the stations and the monitored demanded amount of charged batteries of each of the stations comprises
- classifying the stations into two classes, wherein a station of a first class of the two classes requires obtaining one or more charged batteries for fulfilling its demanded amount of charged batteries or has a demanded amount of charged batteries above a respective threshold and a station of a second class of the two classes has resources for providing one or more excess charged batteries;
- generating a directed representation with each battery slot of each station being a node and an edge going from each excess charged battery of each station of the second class to each battery of each station of the first class having a charging level lower than a threshold for qualifying as a non-empty battery;
- assigning a cost to each edge of the directed representation, wherein the greater a distance the greater the cost and vice versa; and
- determining a distribution of the charged batteries using the directed representation with the assigned costs.

7. The computer-implemented method according to any one of the previous claims, the method comprises
- selecting the entity among the entities depending on at least one of a location, a planned route of movement and a movement behavior of each entity of the entities.

8. The computer-implemented method according to any one of the previous claims, wherein at least one of the following is true:
- the command instructs the entity to provide one or more charged batteries from a source station of the stations to a destination station of the stations, and the method comprises selecting the entity among the entities such that at least one of the following is true: its location is suited to a location of the source station, its planned route of movement is suited to the location of the source station and a location of the destination station, and its movement behavior is suited to the location of the source station and the location of the destination station, wherein
- the location of the entity is suited to the location of the source station in case the distance to be travelled or the travel time from the location of the entity to the location of the source station is shorter than a respective threshold,
- the planned route of movement of the entity is suited to the location of the source station and the location of the destination station in case the planned route passes by the source station and the destination station; or in case a re-planning of the planned route of movement necessary to perform the re-distribution of the one or more charged batteries from the source station to the destination station results in a total travel time from the current location of the entity via the location of the source station to the destination station that is shorter than a respective threshold and/or in an energy consumption that is lower than a respective threshold, and
- the movement behavior of the entity is suited to the location of the source station and the destination station in case there are no stopping of the entity when moving via the source station to the destination station or a number of stopping of the entity is smaller than a respective threshold; and/or in case the entity moves with a speed from the source station to the destination station that is higher than a respective threshold;
- the command instructs the entity to provide one or more charged batteries of its one or more battery slots to a destination station of the stations, and the method comprises selecting the entity among the entities such that at least one of its location, its planned route of movement and its movement behavior is suited to a location of the destination station, wherein
- the location of the entity is suited to the location of the destination station in case the distance to be travelled or the travel time from the location of the entity to the location of the destination station is shorter than a respective threshold,
- the planned route of movement of the entity is suited to the location of the destination station in case the planned route passes by the destination station; or in case a re-planning of the planned route of movement necessary to provide the one or more charged batteries to the destination station results in a total travel time from the current location of the entity to the destination station that is shorter than a respective threshold and/or in an energy consumption that is lower than a respective threshold, and
- the movement behavior of the entity is suited to the location of the destination station in case there are no stopping of the entity when moving to the destination station or a number of stopping of the entity is smaller than a respective threshold; and/or in case the entity moves with a speed to the destination station that is higher than a respective threshold; and
- the command instructs the entity to provide one or more charged batteries of its one or more battery slots to a destination entity of the entities, and the method comprises selecting the entity among the entities such that at least one of its location, its planned route of movement and its movement behavior is suited to a location of the destination entity, wherein
- the location of the entity is suited to the location of the destination entity in case the distance to be travelled or the travel time from the location of the entity to the location of the destination entity is shorter than a respective threshold,
- the planned route of movement of the entity is suited to the location of the destination entity in case the planned route passes by the destination entity or allows the two entities to meet at common location; or in case a re-planning of the planned route of movement necessary to provide the one or more charged batteries to the destination entity results in a total travel time from the current location of the entity to the destination entity that is shorter than a respective threshold and/or in an energy consumption that is lower than a respective threshold, and
- the movement behavior of the entity is suited to the location of the destination entity in case there are no stopping of the entity when moving to the destination entity or a number of stopping of the entity is smaller than a respective threshold; and/or in case the entity moves with a speed to the destination entity that is higher than a respective threshold.

9. The computer-implemented method according to any one of the previous claims, the method comprises, after the entity has performed at least the part of the computed re-distribution of the one or more of the charged batteries in the system,
- increasing a charging level of one or more batteries of the one or more battery slots of the entity by instructing, depending on the monitored amount of charged batteries of each of the stations and the monitored demanded amount of charged batteries of each of the stations, the entity to swap its battery or at least one of its batteries with a corresponding amount of batteries having a higher charging level of a source station of the stations.

10. The computer-implemented method according to claim 9, wherein the method comprises selecting the source station among the stations such that at least one of a location, a planned route of movement and a movement behavior of the entity suits a location of the source station, wherein
- the location of the entity suits the location of the source station in case the distance to be travelled or the travel time from the location of the entity to the location of the source station is shorter than a respective threshold,
- the planned route of movement of the entity suits the location of the source station in case the planned route passes by the source station; or in case a necessary re-planning of the planned route of movement for reaching the source station results in a total travel time from the current location of the entity to the source station that is shorter than a respective threshold and/or in an energy consumption that is lower than a respective threshold, and
- the movement behavior of the entity suits the location of the source station in case there are no stopping of the entity when moving to the source station or a number of stopping of the entity is smaller than a respective threshold; and/or in case the entity moves with a speed to the source station that is higher than a respective threshold.

11. The computer-implemented method according to any one of the previous claims, wherein method comprises selecting the source station among the stations such that at least one of the following is true
- the source station has resources for providing one or more charged batteries,
- the source station has resources for providing the greatest amount of charged batteries among the stations,
- a distance between the source station and the destination station is smaller than a threshold for the distance, and
- a distance between the source station and the destination station is a minimum distance among distances from the source station.

12. The computer-implemented method according to any one of the previous claims,
wherein the method comprises selecting the destination station among the stations such that
- the destination station requires obtaining one or more charged batteries for fulfilling its demanded amount of charged batteries, and/or
- the destination station requires obtaining the greatest amount of charged batteries for fulfilling its demanded amount of charged batteries among the stations.

13. A data processing apparatus comprising means for carrying out the computer-implemented method according to any one of claims 1 to 12.

14. A system (1) comprising:
- locally distributed stations (3) for providing exchange batteries,
- entities (4) each comprising one or more battery slots, and
- a management entity (2) comprising the data processing apparatus of claim 13.

15. The system according to claim 14, wherein the entities (4) comprise at least one of
- one or more autonomous vehicles;
- one or more autonomous robots;
- one or more vehicles each operated by a human, and
- one or more robots each operated by a human.

16. A computer program comprising instructions which, when the program is executed by a data processing apparatus according to claim 13, cause the data processing apparatus to carry out the computer-implemented method according to any one of claims 1 to 12.

17. A computer-readable medium comprising instructions which, when executed by a data processing apparatus according to claim 13, cause the data processing apparatus to carry out the computer-implemented method according to any one of claims 1 to 12.

## Patentansprüche

1. Computerimplementiertes Verfahren zum Steuern einer Verteilung geladener Batterien in einem System, das lokal verteilte Stationen zum Bereitstellen von Austauschbatterien und Einheiten umfasst, die jeweils einen oder mehrere Batteriesteckplätze umfassen, wobei das Verfahren Folgendes umfasst:
- Überwachen (100) einer Menge geladener Batterien von jeder der Stationen;
- Überwachen (101) einer geforderten Menge geladener Batterien von jeder der Stationen;
- Berechnen (102) einer Umverteilung der geladenen Batterien in dem System unter Verwendung der überwachten Menge der geladenen Batterien jeder der Stationen und der überwachten geforderten Menge der geladenen Batterien jeder der Stationen; und
- Bereitstellen (103) eines Befehls an eine Kommunikationseinheit, die mit einer Einheit der Einheiten assoziiert ist, mindestens einen Teil der berechneten Umverteilung der geladenen Batterien in dem System durchzuführen;
**dadurch gekennzeichnet, dass**
der Befehl die Einheit anweist, mindestens eines von Folgendem durchzuführen:
- Bereitstellen einer oder mehrerer geladener Batterien von einer Quellstation der Stationen an eine Zielstation der Stationen;
- Bereitstellen einer oder mehrerer geladener Batterien ihrer einen oder mehreren Batteriesteckplätze an eine Zielstation der Stationen; und
- Bereitstellen einer oder mehrerer geladener Batterien ihrer einen oder mehreren Batteriesteckplätze an eine Zieleinheit der Einheiten.

2. Computerimplementiertes Verfahren nach Anspruch 1, wobei das Verfahren Folgendes umfasst:
- Überwachen eines Zustands jeder der Einheiten; und
- Berechnen der Umverteilung der geladenen Batterien in dem System unter Verwendung der überwachten Menge der geladenen Batterien jeder der Stationen, der überwachten geforderten Menge der geladenen Batterien jeder der Stationen und des überwachten Zustands jeder der Einheiten.

3. Computerimplementiertes Verfahren nach Anspruch 2, wobei das Überwachen des Zustands jeder der Einheiten das Überwachen folgender Elemente umfasst:
- eines Ortes der einzelnen Einheiten, und/oder
- einer Menge geladener Batterien, die in dem einen oder den mehreren Batteriesteckplätzen jeder der Einheiten untergebracht sind.

4. Computerimplementiertes Verfahren nach einem der vorhergehenden Ansprüche, wobei das Berechnen der Umverteilung der geladenen Batterien in dem System unter Verwendung der überwachten Menge geladener Batterien jeder der Stationen und der überwachten angeforderten Menge geladener Batterien jeder der Stationen Folgendes umfasst:
- Ausgleichen der Verteilung der geladenen Batterien, so dass je größer eine geforderte Menge an geladenen Batterien einer Station ist, desto größer die Menge an geladenen Batterien der Station ist und umgekehrt.

5. Computerimplementiertes Verfahren nach einem der vorhergehenden Ansprüche, wobei das Überwachen einer angeforderten Menge geladener Batterien jeder der Stationen Folgendes umfasst:
- Überwachen einer tatsächlichen Menge an geladenen Batterien, die von der Station angefordert werden, und/oder einer vorhergesagten Menge an geladenen Batterien, die von der Station angefordert werden.

6. Computerimplementiertes Verfahren nach einem der vorhergehenden Ansprüche, wobei das Berechnen der Umverteilung der geladenen Batterien in dem System unter Verwendung der überwachten Menge geladener Batterien jeder der Stationen und der überwachten angeforderten Menge geladener Batterien jeder der Stationen Folgendes umfasst:
- Klassifizieren der Stationen in zwei Klassen, wobei eine Station einer ersten Klasse der zwei Klassen das Erhalten einer oder mehrerer geladener Batterien zum Erfüllen ihrer geforderten Menge geladener Batterien erfordert oder eine geforderte Menge geladener Batterien über einem jeweiligen Schwellenwert aufweist und eine Station einer zweiten Klasse der zwei Klassen Ressourcen zum Bereitstellen einer oder mehrerer überschüssiger geladener Batterien aufweist;
- Erzeugen einer gerichteten Repräsentation, wobei jeder Batteriesteckplatz jeder Station ein Knoten und eine Kante ist, die von jeder überschüssigen geladenen Batterie jeder Station der zweiten Klasse zu jeder Batterie jeder Station der ersten Klasse geht, die einen Ladepegel aufweist, der niedriger als eine Schwelle zum Qualifizieren als eine nicht leere Batterie ist;
- Zuweisen von Kosten zu jeder Kante der gerichteten Repräsentation, wobei gilt, dass, je größer eine Entfernung ist, desto größer die Kosten sind und umgekehrt; und
- Bestimmen einer Verteilung der geladenen Batterien anhand der gerichteten Repräsentation mit den zugewiesenen Kosten.

7. Computerimplementiertes Verfahren nach einem der vorhergehenden Ansprüche, wobei das Verfahren Folgendes umfasst:
- Auswählen der Einheit unter den Einheiten in Abhängigkeit von einem Ort und/oder einer geplanten Bewegungsroute und/oder einem Bewegungsverhalten jeder Einheit der Einheiten.

8. Computerimplementiertes Verfahren nach einem der vorhergehenden Ansprüche, wobei mindestens eines von Folgendem wahr ist:
- der Befehl weist die Einheit an, eine oder mehrere geladene Batterien von einer Quellstation der Stationen an eine Zielstation der Stationen bereitzustellen, und das Verfahren umfasst das Auswählen der Einheit unter den Einheiten, so dass mindestens eine der folgenden Bedingungen erfüllt ist: ihr Ort ist für einen Ort der Quellstation geeignet, ihre geplante Bewegungsroute ist für den Ort der Quellstation und einen Ort der Zielstation geeignet, und ihr Bewegungsverhalten ist für den Ort der Quellstation und den Ort der Zielstation geeignet, wobei
- der Ort der Einheit für den Ort der Quellstation geeignet ist, wenn die zurückzulegende Entfernung oder die Fahrzeit vom Ort der Einheit zum Ort der Quellstation kürzer ist als ein entsprechender Schwellenwert,
- die geplante Bewegungsroute der Einheit für den Ort der Quellstation und den Ort der Zielstation geeignet ist, falls die geplante Route an der Quellstation und der Zielstation vorbeiführt; oder falls eine Neuplanung der geplanten Bewegungsroute, die erforderlich ist, um die Umverteilung der einen oder mehreren geladenen Batterien von der Quellstation zur Zielstation durchzuführen, zu einer Gesamtfahrzeit vom aktuellen Ort der Einheit über den Ort der Quellstation zur Zielstation führt, die kürzer ist als ein jeweiliger Schwellenwert, und/oder zu einem Energieverbrauch, der niedriger ist als ein jeweiliger Schwellenwert, und
- das Bewegungsverhalten der Einheit für den Ort der Quellstation und der Zielstation geeignet ist, wenn die Einheit beim Bewegen über die Quellstation zur Zielstation nicht anhält oder eine Anzahl von Stopps der Einheit kleiner als ein jeweiliger Schwellenwert ist; und/oder wenn sich die Einheit mit einer Geschwindigkeit von der Quellstation zur Zielstation bewegt, die höher als ein jeweiliger Schwellenwert ist;
- der Befehl die Einheit anweist, eine oder mehrere geladene Batterien aus ihrem einen oder mehreren Batteriesteckplätzen an eine Zielstation der Stationen bereitzustellen, und das Verfahren das Auswählen der Einheit unter den Einheiten umfasst, so dass mindestens einer ihrer Orte, ihre geplante Bewegungsroute und ihr Bewegungsverhalten für einen Ort der Zielstation geeignet ist, wobei
- der Ort der Einheit für den Ort der Zielstation geeignet ist, falls die zurückzulegende Entfernung oder die Fahrzeit vom Ort der Einheit zum Ort der Zielstation kürzer ist als ein jeweiliger Schwellenwert,
- die geplante Bewegungsroute der Einheit für den Ort der Zielstation geeignet ist, falls die geplante Route an der Zielstation vorbeiführt; oder falls eine Neuplanung der geplanten Bewegungsroute, die erforderlich ist, um die eine oder die mehreren geladenen Batterien an die Zielstation bereitzustellen, zu einer Gesamtfahrzeit vom aktuellen Ort der Einheit zur Zielstation führt, die kürzer ist als ein entsprechender Schwellenwert, und/oder zu einem Energieverbrauch, der niedriger ist als ein entsprechender Schwellenwert, und
- das Bewegungsverhalten der Einheit für den Ort der Zielstation geeignet ist, wenn die Einheit beim Bewegen zur Zielstation nicht anhält oder die Anzahl der Stopps der Einheit kleiner als ein jeweiliger Schwellenwert ist; und/oder wenn sich die Einheit mit einer Geschwindigkeit zur Zielstation bewegt, die höher als ein jeweiliger Schwellenwert ist; und
- der Befehl die Einheit anweist, eine oder mehrere geladene Batterien ihres einen oder mehreren Batteriesteckplatzes einer Zieleinheit der Einheiten bereitzustellen, und das Verfahren das Auswählen der Einheit unter den Einheiten umfasst, so dass mindestens einer ihrer Orte, ihrer geplanten Bewegungsroute und ihres Bewegungsverhaltens für einen Ort der Zieleinheit geeignet ist, wobei
- der Ort der Einheit für den Ort der Zieleinheit geeignet ist, falls die zurückzulegende Entfernung oder die Fahrzeit vom Ort der Einheit zum Ort der Zieleinheit kürzer ist als ein entsprechender Schwellenwert,
- die geplante Bewegungsroute der Einheit für den Ort der Zieleinheit geeignet ist, falls die geplante Route an der Zieleinheit vorbeiführt oder es ermöglicht, dass sich die beiden Einheiten an einem gemeinsamen Ort treffen; oder falls eine Neuplanung der geplanten Bewegungsroute, die erforderlich ist, um die eine oder die mehreren geladenen Batterien der Zieleinheit bereitzustellen, zu einer Gesamtfahrzeit vom aktuellen Ort der Einheit zur Zieleinheit führt, die kürzer ist als ein entsprechender Schwellenwert, und/oder zu einem Energieverbrauch, der niedriger ist als ein entsprechender Schwellenwert, und
- das Bewegungsverhalten der Einheit für den Ort der Zieleinheit geeignet ist, wenn kein Anhalten der Einheit beim Bewegen zur Zieleinheit erfolgt oder eine Anzahl von Stopps der Einheit kleiner als ein jeweiliger Schwellenwert ist; und/oder wenn sich die Einheit mit einer Geschwindigkeit zur Zieleinheit bewegt, die höher als ein jeweiliger Schwellenwert ist.

9. Computerimplementiertes Verfahren nach einem der vorhergehenden Ansprüche, wobei das Verfahren, nachdem die Einheit mindestens den Teil der berechneten Umverteilung der einen oder mehreren der geladenen Batterien in dem System durchgeführt hat, Folgendes umfasst:
- Erhöhen eines Ladepegels einer oder mehrerer Batterien des einen oder der mehreren Batteriesteckplätze der Einheit durch Anweisen, in Abhängigkeit von der überwachten Menge geladener Batterien jeder der Stationen und der überwachten geforderten Menge geladener Batterien jeder der Stationen, die Einheit dazu anzuweisen, ihre Batterie oder mindestens eine ihrer Batterien mit einer entsprechenden Menge von Batterien mit einem höheren Ladepegel einer Quellstation der Stationen auszutauschen.

10. Computerimplementiertes Verfahren nach Anspruch 9, wobei das Verfahren Auswählen der Quellstation unter den Stationen umfasst, sodass mindestens eines von einem Ort, einer geplanten Bewegungsroute und einem Bewegungsverhalten der Einheit einem Ort der Quellstation entspricht, wobei
- der Ort der Einheit dem Ort der Quellstation entspricht, falls die zurückgelegte Entfernung oder die Reisezeit vom Ort der Einheit zum Ort der Quellstation kürzer als ein jeweiliger Schwellenwert ist;
- die geplante Bewegungsroute der Einheit dem Ort der Quellstation entspricht, falls die geplante Route an der Quellstation vorbeiführt; oder falls eine notwendige Neuplanung der geplanten Bewegungsroute zum Erreichen der Quellstation zu einer Gesamtfahrzeit vom aktuellen Ort der Einheit zur Quellstation führt, die kürzer als ein jeweiliger Schwellenwert ist, und/oder zu einem Energieverbrauch, der niedriger als ein jeweiliger Schwellenwert ist, und
- das Bewegungsverhalten der Einheit dem Ort der Quellstation entspricht, falls es kein Anhalten der Einheit beim Bewegen zu der Quellstation gibt oder eine Anzahl von Anhalten der Einheit kleiner als ein jeweiliger Schwellenwert ist; und/oder falls sich die Einheit mit einer Geschwindigkeit zu der Quellstation bewegt, die höher als ein jeweiliger Schwellenwert ist.

11. Computerimplementiertes Verfahren nach einem der vorhergehenden Ansprüche, wobei das Verfahren Auswählen der Quellstation unter den Stationen umfasst, so dass mindestens eines von Folgendem wahr ist:
- die Quellstation verfügt über Ressourcen für die Bereitstellung einer oder mehrerer geladener Batterien,
- die Quellstation verfügt über Mittel, um die größte Menge an geladenen Batterien unter den Stationen bereitzustellen,
- eine Entfernung zwischen der Quellstation und der Zielstation ist kleiner als ein Schwellenwert für die Entfernung, und
- eine Entfernung zwischen der Quellstation und der Zielstation ist eine Mindestentfernung unter den Entfernungen von der Quellstation.

12. Computerimplementiertes Verfahren nach einem der vorhergehenden Ansprüche, wobei das Verfahren das Auswählen der Zielstation unter den Stationen umfasst, so dass
- die Zielstation verlangt, dass eine oder mehrere geladene Batterien zur Erfüllung der geforderten Menge geladener Batterien bereitgestellt werden, und/oder
- die Zielstation die größte Menge geladener Batterien benötigt, um die erforderliche Menge geladener Batterien unter den Stationen zu erfüllen.

13. Datenverarbeitungsvorrichtung, die Mittel zum Durchführen des computerimplementierten Verfahrens nach einem der Ansprüche 1 bis 12 umfasst.

14. System (1), das Folgendes umfasst:
- lokal verteilte Stationen (3) zur Bereitstellung von Austauschbatterien,
- Einheiten (4), die jeweils einen oder mehrere Batteriesteckplätze umfassen, und
- eine Verwaltungseinheit (2), die die Datenverarbeitungsvorrichtung nach Anspruch 13 umfasst.

15. System nach Anspruch 14, wobei die Einheiten (4) mindestens eines von Folgendem umfassen:
- ein oder mehrere autonome Fahrzeuge;
- einen oder mehrere autonome Roboter;
- ein oder mehrere Fahrzeuge, die jeweils von einem Menschen bedient werden, und
- ein oder mehrere Roboter, die jeweils von einem Menschen bedient werden.

16. Computerprogramm, das Anweisungen umfasst, die, wenn das Programm durch eine Datenverarbeitungsvorrichtung nach Anspruch 13 ausgeführt wird, die Datenverarbeitungsvorrichtung veranlassen, das computerimplementierte Verfahren nach einem der Ansprüche 1 bis 12 auszuführen.

17. Computerlesbares Medium, das Anweisungen umfasst, die, wenn sie durch eine Datenverarbeitungsvorrichtung nach Anspruch 13 ausgeführt werden, die Datenverarbeitungsvorrichtung veranlassen, das computerimplementierte Verfahren nach einem der Ansprüche 1 bis 12 auszuführen.

## Revendications

1. Procédé mis en œuvre par ordinateur pour contrôler une distribution de batteries chargées dans un système comprenant des stations distribuées localement afin de fournir des batteries d'échange et des entités comprenant chacune un ou plusieurs espaces de batterie, dans lequel le procédé comprend
- la surveillance (100) d'une quantité de batteries chargées de chacune des stations ;
- la surveillance (101) d'une quantité exigée de batteries chargées de chacune des stations ;
- le calcul (102) d'une redistribution des batteries chargées dans le système en utilisant la quantité surveillée de batteries chargées de chacune des stations et la quantité exigée surveillée de batteries chargées de chacune des stations ; et
- la fourniture (103) d'une commande à une entité de communication associée à une entité des entités pour réaliser au moins une partie de la redistribution calculée des batteries chargées dans le système,
**caractérisé en ce que**
la commande ordonne à l'entité de réaliser au moins l'une des actions suivantes :
- fournir une ou plusieurs batteries chargées depuis une station source des stations à une station de destination des stations ;
- fournir une ou plusieurs batteries chargées d'un ou de plusieurs de ses espaces de batterie à une station de destination des stations ; et
- fournir une ou plusieurs batteries chargées d'un ou de plusieurs de ses espaces de batterie à une entité de destination des entités.

2. Procédé mis en œuvre par ordinateur selon la revendication 1, le procédé comprenant
- la surveillance d'un état de chacune des entités ; et
- le calcul de la redistribution des batteries chargées dans le système en utilisant la quantité surveillée de batteries chargées de chacune des stations, la quantité exigée surveillée de batteries chargées de chacune des stations, et l'état surveillé de chacune des entités.

3. Procédé mis en œuvre par ordinateur selon la revendication 2, dans lequel la surveillance de l'état de chacune des entités comprend la surveillance
- d'une localisation de chacune des entités, et/ou
- d'une quantité de batteries chargées logées par l'un ou les plusieurs espaces de batterie de chacune des entités.

4. Procédé mis en œuvre par ordinateur selon l'une quelconque des revendications précédentes, dans lequel le calcul de la redistribution des batteries chargées dans le système en utilisant la quantité surveillée de batteries chargées de chacune des stations et la quantité exigée surveillée de batteries chargées de chacune des stations comprend
- l'équilibrage de la distribution des batteries chargées de manière telle que plus une quantité exigée de batteries chargées d'une station est grande, plus la quantité de batteries chargées de la station est grande et vice versa.

5. Procédé mis en œuvre par ordinateur selon l'une quelconque des revendications précédentes, dans lequel la surveillance d'une quantité exigée de batteries chargées de chacune des stations comprend
- la surveillance d'une quantité réelle de batteries chargées exigées auprès de la station et/ou d'une quantité prédite de batteries chargées exigées auprès de la station.

6. Procédé mis en œuvre par ordinateur selon l'une quelconque des revendications précédentes, dans lequel le calcul de la redistribution des batteries chargées dans le système en utilisant la quantité surveillée de batteries chargées de chacune des stations et la quantité exigée surveillée de batteries chargées de chacune des stations comprend
- la classification des stations en deux classes, dans lequel une station d'une première classe des deux classes doit obtenir une ou plusieurs batteries chargées pour répondre à sa quantité exigée de batteries chargées ou a une quantité exigée de batteries chargées supérieure à un seuil respectif et une station d'une seconde classe des deux classes a des ressources afin de fournir une ou plusieurs batteries chargées excédentaires ;
- la génération d'une représentation dirigée où chaque espace de batterie de chaque station est un nœud et une délimitation allant depuis chaque batterie chargée excédentaire de chaque station de la seconde classe jusqu'à chaque batterie de chaque station de la première classe a un niveau de charge inférieur à un seuil pour la qualification en tant que batterie non vide ;
- l'attribution d'un coût à chaque délimitation de la représentation dirigée, dans lequel plus une distance est grande, plus le coût est grand et vice versa ; et
- la détermination d'une distribution des batteries chargées en utilisant la représentation dirigée avec les coûts attribués.

7. Procédé mis en œuvre par ordinateur selon l'une quelconque des revendications précédentes, le procédé comprend
- la sélection de l'entité parmi les entités en fonction d'au moins un élément parmi une localisation, un itinéraire planifié de mouvement, et un comportement de mouvement de chaque entité des entités.

8. Procédé mis en œuvre par ordinateur selon l'une quelconque des revendications précédentes, dans lequel au moins l'un des faits suivants est vrai :
- la commande ordonne à l'entité de fournir une ou plusieurs batteries chargées depuis une station source des stations à une station de destination des stations, et le procédé comprend la sélection de l'entité parmi les entités de manière telle qu'au moins l'un des faits suivants est vrai : sa localisation est appropriée à une localisation de la station source, son itinéraire planifié de mouvement est approprié à la localisation de la station source et à une localisation de la station de destination, et son comportement de mouvement est approprié à la localisation de la station source et à la localisation de la station de destination, dans lequel
- la localisation de l'entité est appropriée à la localisation de la station source au cas où la distance devant être parcourue ou le temps de déplacement depuis la localisation de l'entité jusqu'à la localisation de la station source est plus courte qu'un seuil respectif,
- l'itinéraire planifié de mouvement de l'entité est approprié à la localisation de la station source et à la localisation de la station de destination au cas où l'itinéraire planifié passe par la station source et la station de destination ; ou au cas où une replanification de l'itinéraire planifié de mouvement nécessaire pour réaliser la redistribution de l'une ou des plusieurs batteries chargées depuis la station source jusqu'à la station de destination a pour résultat un temps de déplacement total depuis la localisation actuelle de l'entité via la localisation de la station source jusqu'à la station de destination qui est plus court qu'un seuil respectif et/ou une consommation d'énergie qui est inférieure à un seuil respectif, et
- le comportement de mouvement de l'entité est approprié à la localisation de la station source et à la station de destination au cas où il n'y a aucun arrêt de l'entité lors du mouvement via la station source jusqu'à la station de destination ou un nombre d'arrêts de l'entité est plus petit qu'un seuil respectif ; et/ou au cas où l'entité se meut avec une vitesse depuis la station source jusqu'à la station de destination qui est plus élevée qu'un seuil respectif ;
- la commande ordonne à l'entité de fournir une ou plusieurs batteries chargées d'un ou de plusieurs de ses espaces de batterie à une station de destination des stations, et le procédé comprend la sélection de l'entité parmi les entités de manière telle qu'au moins un élément parmi sa localisation, son itinéraire planifié de mouvement, et son comportement de mouvement est approprié à une localisation de la station de destination, dans lequel
- la localisation de l'entité est appropriée à la localisation de la station de destination au cas où la distance devant être parcourue ou le temps de déplacement depuis la localisation de l'entité jusqu'à la localisation de la station de destination est plus court(e) qu'un seuil respectif,
- l'itinéraire planifié de mouvement de l'entité est approprié à la localisation de la station de destination au cas où l'itinéraire planifié passe par la station de destination ; ou au cas où une replanification de l'itinéraire planifié de mouvement nécessaire pour fournir l'une ou les plusieurs batteries chargées à la station de destination a pour résultat un temps de déplacement total depuis la localisation actuelle de l'entité jusqu'à la station de destination qui est plus court qu'un seuil respectif et/ou une consommation d'énergie qui est inférieure à un seuil respectif, et
- le comportement de mouvement de l'entité est approprié à la localisation de la station de destination au cas où il n'y a aucun arrêt de l'entité lors du mouvement jusqu'à la station de destination ou un nombre d'arrêts de l'entité est plus petit qu'un seuil respectif ; et/ou au cas où l'entité se meut avec une vitesse jusqu'à la station de destination qui est plus élevée qu'un seuil respectif ; et
- la commande ordonne à l'entité de fournir une ou plusieurs batteries chargées d'un ou de plusieurs de ses espaces de batterie à une entité de destination des entités, et le procédé comprend la sélection de l'entité parmi les entités de manière telle qu'au moins un élément parmi sa localisation, son itinéraire planifié de mouvement, et son comportement de mouvement est approprié à une localisation de l'entité de destination, dans lequel
- la localisation de l'entité est appropriée à la localisation de l'entité de destination au cas où la distance devant être parcourue ou le temps de déplacement depuis la localisation de l'entité jusqu'à la localisation de l'entité de destination est plus court(e) qu'un seuil respectif,
- l'itinéraire planifié de mouvement de l'entité est approprié à la localisation de l'entité de destination au cas où l'itinéraire planifié passe par l'entité de destination ou permet aux deux entités de se rencontrer à une localisation commune ; ou au cas où une replanification de l'itinéraire planifié de mouvement nécessaire pour fournir l'une ou les plusieurs batteries chargées à l'entité de destination a pour résultat un temps de déplacement total depuis la localisation actuelle de l'entité jusqu'à l'entité de destination qui est plus court qu'un seuil respectif et/ou une consommation d'énergie qui est inférieure à un seuil respectif, et
- le comportement de mouvement de l'entité est approprié à la localisation de l'entité de destination au cas où il n'y a aucun arrêt de l'entité lors du mouvement jusqu'à l'entité de destination ou un nombre d'arrêts de l'entité est plus petit qu'un seuil respectif ; et/ou au cas où l'entité se meut avec une vitesse jusqu'à l'entité de destination qui est plus élevée qu'un seuil respectif.

9. Procédé mis en œuvre par ordinateur selon l'une quelconque des revendications précédentes, le procédé comprend, après que l'entité a réalisé au moins la partie de la redistribution calculée de l'une ou des plusieurs des batteries chargées dans le système,
- l'augmentation d'un niveau de charge d'une ou plusieurs batteries de l'un ou des plusieurs espaces de batterie de l'entité en ordonnant, en fonction de la quantité surveillée de batteries chargées de chacune des stations et de la quantité exigée surveillée de batteries chargées de chacune des stations, à l'entité de permuter sa batterie ou au moins une de ses batteries avec une quantité correspondante de batteries ayant un niveau de charge plus élevé d'une station source des stations.

10. Procédé mis en œuvre par ordinateur selon la revendication 9, dans lequel le procédé comprend la sélection de la station source parmi les stations de manière telle qu'au moins un élément parmi une localisation, un itinéraire planifié de mouvement, et un comportement de mouvement de l'entité est approprié à une localisation de la station source, dans lequel
- la localisation de l'entité est appropriée à la localisation de la station source au cas où la distance devant être parcourue ou le temps de déplacement depuis la localisation de l'entité jusqu'à la localisation de la station source est plus court(e) qu'un seuil respectif,
- l'itinéraire planifié de mouvement de l'entité est approprié à la localisation de la station source au cas où l'itinéraire planifié passe par la station source ; ou au cas où une replanification nécessaire de l'itinéraire planifié de mouvement afin d'atteindre la station source a pour résultat un temps de déplacement total depuis la localisation actuelle de l'entité jusqu'à la station source qui est plus court qu'un seuil respectif et/ou une consommation d'énergie qui est inférieure à un seuil respectif, et
- le comportement de mouvement de l'entité est approprié à la localisation de la station source au cas où il n'y a aucun arrêt de l'entité lors du mouvement jusqu'à la station source ou un nombre d'arrêts de l'entité est plus petit qu'un seuil respectif ; et/ou au cas où l'entité se meut avec une vitesse jusqu'à la station source qui est plus élevée qu'un seuil respectif.

11. Procédé mis en œuvre par ordinateur selon l'une quelconque des revendications précédentes, dans lequel le procédé comprend la sélection de la station source parmi les stations de manière telle qu'au moins l'un des faits suivants est vrai
- la station source a des ressources afin de fournir une ou plusieurs batteries chargées,
- la station source a des ressources afin de fournir la plus grande quantité de batteries chargées parmi les stations,
- une distance entre la station source et la station de destination est plus petite qu'un seuil pour la distance, et
- une distance entre la station source et la station de destination est une distance minimum parmi des distances depuis la station source.

12. Procédé mis en œuvre par ordinateur selon l'une quelconque des revendications précédentes, dans lequel le procédé comprend la sélection de la station de destination parmi les stations de manière telle que
- la station de destination doit obtenir une ou plusieurs batteries chargées pour répondre à sa quantité exigée de batteries chargées, et/ou
- la station de destination doit obtenir la plus grande quantité de batteries chargées pour répondre à sa quantité exigée de batteries chargées parmi les stations.

13. Appareil de traitement de données, comprenant des moyens pour effectuer le procédé mis en œuvre par ordinateur selon l'une quelconque des revendications 1 à 12.

14. Système (1), comprenant :
- des stations distribuées localement (3) afin de fournir des batteries d'échange,
- des entités (4), chacune comprenant un ou plusieurs espaces de batterie, et
- une entité de gestion (2) comprenant l'appareil de traitement de données de la revendication 13.

15. Système selon la revendication 14, dans lequel les entités (4) comprennent au moins un élément parmi
- un ou plusieurs véhicule autonomes ;
- un ou plusieurs robots autonomes ;
- un ou plusieurs véhicules chacun piloté par un humain, et
- une ou plusieurs robots chacun piloté par un humain.

16. Programme d'ordinateur comprenant des instructions qui, lorsque le programme est exécuté par un appareil de traitement de données selon la revendication 13, amènent l'appareil de traitement de données à effectuer le procédé mis en œuvre par ordinateur selon l'une quelconque des revendications 1 à 12.

17. Support lisible par ordinateur comprenant des instructions qui, lorsqu'elles sont exécutées par un appareil de traitement de données selon la revendication 13, amènent l'appareil de traitement de données à effectuer le procédé mis en œuvre par ordinateur selon l'une quelconque des revendications 1 à 12.
